# EUROPEAN PATENT SPECIFICATION

(11) **EP 4 104 617 B1**
(45) Date of publication and mention of the grant of the patent: **27.08.2025**
(21) Application number: 21705910.4
(22) Date of filing: 12.02.2021
(51) Int. Cl.: H04W 74/0833, H04W 74/08, H04W 74/0808, H04W 74/0836

(54) **RANDOM ACCESS IN A WIRELESS COMMUNICATION SYSTEM**
DIREKTZUGRIFF IN EINEM DRAHTLOSEN KOMMUNIKATIONSSYSTEM
ACCÈS ALÉATOIRE DANS UN SYSTÈME DE COMMUNICATION SANS FIL

(30) Priority: 13.02.2020 US 202062976076 P
(43) Date of publication of application: 21.12.2022
(73) Proprietor: Telefonaktiebolaget LM Ericsson (publ), 164 83 Stockholm (SE)
(72) Inventor: WANG, Min, 97753 Luleå (SE); CHRISTOFFERSSON, Jan, 97561 Luleå (SE)
(74) Representative: Ericsson
(86) International application number: PCT/EP2021/053420
(87) International publication number: WO 2021/160782

(56) References cited:
- WO-A1-2016/137948

## Description

### RELATED APPLICATIONS

The present application claims the benefit of U.S. provisional application serial no. 62/976,076, filed 13 February 2020.

### TECHNICAL FIELD

The present application relates generally to wireless communication, and relates more particularly to random access in a wireless communication system.

### BACKGROUND

Random access in a wireless communication system involves a wireless device (e.g., a user equipment, UE) transmitting a random access preamble to a network node (e.g., a base station) over a random access channel. If there are multiple occasions in time when the wireless device can transmit the random access preamble, the wireless device must select one of those occasions for transmitting the preamble. Then, after transmitting the preamble, the wireless device in a so-called two-step random access procedure may proactively transmit a physical uplink shared channel (PUSCH) transmission, even before the wireless device receives a random access response from the network node in response to the preamble.

Some contexts complicate the random access procedure when multiple occasions are available in time for transmitting the preamble. For example, some wireless communication systems (e.g., New Radio Unlicensed, NR-U) require a listen-before-talk (LBT) procedure to be successfully performed before the wireless device can transmit, unless the gap in time since the last transmission is less than a certain threshold (e.g., 16 us). If the wireless device randomly selects the occasion in which it will transmit the preamble, the randomness of the selection advantageously distributes device loading across multiple occasions. But the randomness of the selection also means that, sometimes, the wireless device will have to inefficiently perform two LBT procedures, one before transmitting the preamble and another one before transmitting the physical uplink shared channel.

WO2016/137948 A1 discloses enhanced physical random access channel (ePRACH) procedures for communications systems having contention-based shared spectrum including unlicensed frequency bands, addressing the uncertainty of transmission in listen before talk (LBT)- based communications and cooperation with other radio access technologies competing for the same frequency spectrum. An extended clear channel Assessment over multiple subframes is performed by the UE, during which the presence of channel reserving signals is monitored. In case of eCCA/CCA success, a random access preamble is transmitted, before the subframe resync boundary, or else on the following subframe, if does not fit anymore.

### SUMMARY

It is the object of the invention to overcome exemplary problems described above. This object is achieved by the independent claims. Advantageous embodiments are described in the dependent claims and by the following description.

Equipping the wireless device with support for these multiple selection methods and allowing the wireless device to choose between them may advantageously enable use of different selection methods under different circumstances or conditions, so that the wireless device can use whichever of the selection methods proves best under any given circumstance or condition. In this regard, use of a random selection method may advantageously distribute device loading across multiple occasions, whereas , e.g., use of a last-in-time selection method may advantageously reduce the number of required LBT procedures and/or otherwise facilitate gapless transmission. In some examples, then, the wireless device may effectively choose to use the last-in-time selection method in favor of gapless transmission, unless channel occupancy, random access channel loading, or LBT failure statistics suggests that the wireless device should instead choose to use the random selection method.

### BRIEF DESCRIPTION OF THE DRAWINGS

Figure 1 is a block diagram of a wireless communication network according to some examples.
Figure 2 is a logic flow diagram of a method performed by a wireless device according to some examples.
Figure 3A is a logic flow diagram of a method performed by a radio network node according to some examples.
Figure 3B is a logic flow diagram of a method performed by a radio network node according to other examples.
Figure 3C is a logic flow diagram of a method performed by a radio network node according to yet other examples.
Figure 4A is a logic flow diagram of a method performed by a radio network node according to still other examples.
Figure 4B is a logic flow diagram of a method performed by a wireless device according to other examples.
Figure 5 is a block diagram of a wireless device according to some examples.
Figure 6 is a block diagram of a radio network node according to some examples.
Figure 7 is a call flow diagram of a random access procedure according to some examples.
Figure 8 is a call flow diagram of a random access procedure according to other examples.
Figure 9 is a timing diagram of random access occasions according to some examples.
Figure 10 is a block diagram of a wireless communication network according to some examples.
Figure 11 is a block diagram of a user equipment according to some examples.
Figure 12 is a block diagram of a virtualization environment according to some examples.
Figure 13 is a block diagram of a communication network with a host computer according to some examples.
Figure 14 is a block diagram of a host computer according to some examples.
Figure 15 is a flowchart illustrating a method implemented in a communication system, in accordance with one example.
Figure 16 is a flowchart illustrating a method implemented in a communication system, in accordance with one example.
Figure 17 is a flowchart illustrating a method implemented in a communication system, in accordance with one example.
Figure 18 is a flowchart illustrating a method implemented in a communication system, in accordance with one example.

### DETAILED DESCRIPTION

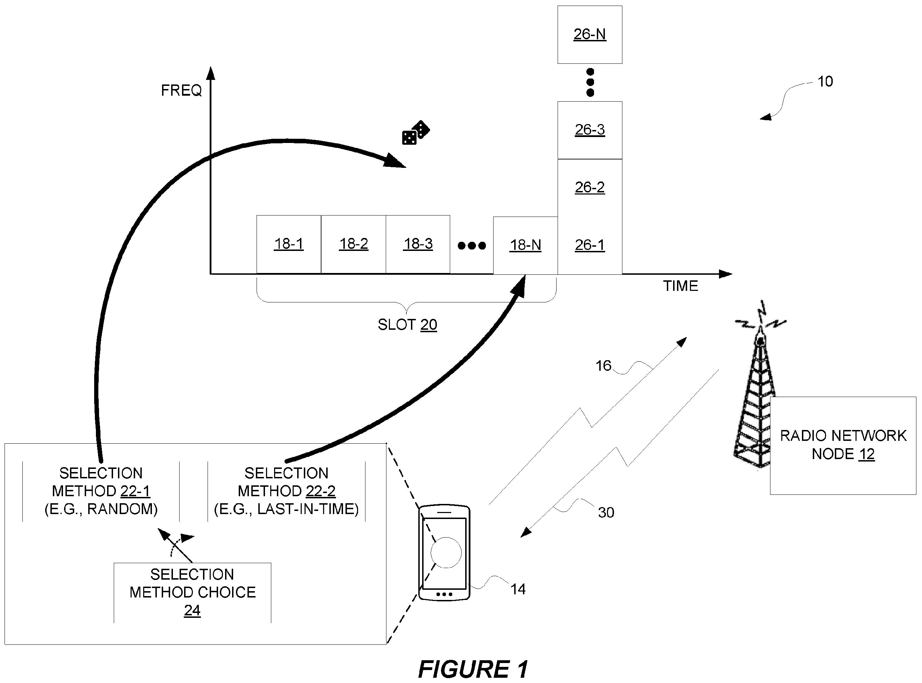

Figure 1 shows a wireless communication system 10 according to some examples. The system 10 may for instance be a New Radio Unlicensed (NR-U) system and/or operate on unlicensed frequency spectrum. The system 10 includes a network node 12 (e.g., a radio network node such as a base station) and a wireless device 14 (e.g., a user equipment, UE). The wireless device 14 is configured to transmit a random access preamble 16 to the network node 12, e.g., on a random access channel in unlicensed frequency spectrum. The random access preamble 16 may for example be or be derived from one of multiple possible preamble sequences, e.g., as generated from different shifts of a root Zadoff-Chu sequence. Regardless, the wireless device 14 may do so for random access to the system 10, which may for instance be needed for establishing a connection with the system 10, for acquiring uplink synchronization, and/or for other reasons.

The wireless device 14 is configured to select an occasion (in time) in which to transmit the random access preamble 16. As shown in Figure 1, for example, the random access preamble 16 is transmittable in any one of multiple occasions 18-1, 18-2,...18-N, also referred to as random access channel occasions or physical random access channel occasions (ROs). In some examples, the multiple occasions 18-1, 18-2,...18-N occur in the same random access channel slot 20. At least some of the multiple occasions 18-1, 18-2,...18-N, though, may occur at different times, e.g., within the same slot 20. In these and other cases, the occasions 18-1, 18-2,...18-N may occur consecutively in time, e.g., at least with respect to occasions that are valid for transmission of the random access preamble 16. Alternatively or additionally, the multiple occasions 18-1, 18-2,...18-N correspond to a synchronization signal and broadcast channel block (SSB) that the wireless device 14 selects, e.g., from among multiple SSBs respectively associated with different sets of multiple occasions. In other examples, the multiple occasions 18-1, 18-2,...18-N correspond to a channel state information reference signal (CSI-RS) that the wireless device 14 selects, e.g., from among multiple CSI-RSs. In any event, no matter the particular nature of the multiple occasions 18-1, 18-2,... 18-N, the wireless device 14 is configured to select one of the occasions 18-1, 18-2,... 18-N as the occasion in which to transmit the random access preamble 16.

Notably in this regard, the wireless device 14 supports or is otherwise configured with multiple selection methods for selecting the occasion in which to transmit the random access preamble 16. As shown in Figure 1, for example, the wireless device 14 supports selection methods 22-1 and 22-2 which provide different methods (i.e., ways) for selecting the occasion in which to transmit the random access preamble 16. For instance, according to some examples, selection method 22-1 may be a random selection method in which the wireless device 14 randomly selects an occasion from among the multiple occasions 18-1, 18-2,...18-N (or from among a subset of the multiple occasions), e.g., with equal probability of selection among occasions that occur at different times. By contrast, according to some examples, selection method 22-2 may be a time-biased selection method in which the wireless device selects an occasion from among the multiple occasions 18-1, 18-2,...18-N, e.g., with unequal probability of selection among at least some occasions that occur at different times. For example, in one such case, the selection method 22-2 may be a last-in-time selection method in which the wireless device 14 (unconditionally) selects an occasion that occurs last in time among the multiple occasions, e.g., by unconditionally selecting occasion 18-N in Figure 1. In this case, then, there may be a 100% probability of selecting an occasion that occurs last in time and a 0% probability of selecting an occasion that does not occur last in time.

Regardless, with support for multiple selection methods, the wireless device 14 advantageously is configured to choose 24 a selection method from among the multiple selection methods 22-1, 22-2 for selecting an occasion in which to transmit the random access preamble 16. That is, rather than being limited to just one method of selecting the occasion in which to transmit a random access preamble 16, the wireless device 14 supports multiple such methods and chooses which of those methods to use, e.g., on a dynamic or preamble transmission by preamble transmission basis, or on a semi-static basis.

Equipping the wireless device 14 with support for these multiple selection methods and allowing the wireless device 14 to choose between them may advantageously enable use of different selection methods under different circumstances or conditions. For example, this may enable the wireless device 14 to use whichever of the selection methods proves best under any given circumstance or condition.

Consider for instance examples in which the wireless device 14 performs a two-step random access procedure, e.g., a Type-2 Layer 1 (L1) random access procedure. In this case, the wireless device 14 transmits the random access preamble 16 (e.g., in a physical random access channel, PRACH) and also proactively transmits a physical uplink shared channel (PUSCH), even before the wireless device 14 receives a response 30 from the network node 12 in response to the preamble 16. The random access preamble 16 and the PUSCH may be referred to as being or as being transmitted in a Message A (MsgA), and the response 30 may be referred to as being or as being transmitted in a Message B (MsgB). As shown in Figure 1, for example, the wireless device 14 may transmit the PUSCH in one of multiple PUSCH occasions 26-1, 26-2,... 26-N. In some examples, different occasions 18-1, 18-2,... 18-N for the preamble transmission map to different respective PUSCH occasions 26-1, 26-2,...26-N, e.g., such that transmission of the preamble 16 in a certain one of the occasions 18-1, 18-2,...18-N dictates that the PUSCH be transmitted in a certain one of the PUSCH occasions 26-1, 26-2...26-N. As an example, transmitting the random access preamble 16 in occasion 18-2 could dictate that the PUSCH be transmitted in PUSCH occasion 26-2. In any event, where the wireless device 14 performs the random access procedure in unlicensed frequency spectrum, the wireless device 14 may perform a listen-before-talk (LBT) procedure before transmitting the random access preamble 16, e.g., as a pre-requisite for transmitting the random access preamble 16. And, if the gap in time between the end of the random access preamble 16 and the start of the PUSCH transmission is less than a certain threshold (e.g., 16 us), the wireless device 14 may perform the PUSCH transmission without performing another LBT procedure. This may be referred to as gapless MsgA transmission. However, if the gap in time is more than the certain threshold, the wireless device 14 must perform yet another LBT procedure before performing the PUSCH transmission. Notably in this regard, the gap in time may be less than the certain threshold if the wireless device 14 selects the last occasion 18-N for transmitting the random access preamble 16, but may be more than the certain threshold if the wireless device 14 selects any other occasion 18-1... 18-N-1 for transmitting the random access preamble 16. In this case, selecting the last occasion 18-N would permit the wireless device 14 to perform gapless MsgA transmission, whereas selecting any other occasion would prevent the wireless device 14 from performing gapless MsgA transmission.

In this context, use of one selection method 22-1 (e.g., a random selection method) may advantageously distribute device loading across multiple occasions 18-1, 18-2,...18-N, whereas use of another selection method 22-2 (e.g., a time-biased selection method such as a last-in-time selection method) may advantageously reduce the number of required LBT procedures and/or otherwise facilitate gapless transmission. In some examples, then, the wireless device may effectively choose to use one selection method (e.g., selection method 22-2) in favor of gapless transmission, unless channel occupancy, random access channel loading, or LBT failure statistics suggests that the wireless device 14 should instead choose to use another selection method (e.g., selection method 22-1).

Accordingly, in some examples the selection method choice 24 is based on channel occupancy. In some examples, the channel occupancy is defined as the percentage of time that Received Signal Strength Indicator (RSSI) is measured above a configured threshold. For this purpose, a RSSI measurement timing configuration (RMTC) may include a measurement duration (e.g. 1-5 ms) and a period between measurements (e.g. {40, 80, 160, 320, 640} ms).

In other examples, the selection method choice 24 is based on one or more metrics. At least one of the one or more metrics may indicate or depend on a load of a random access channel on which the random access preamble 16 is to be transmitted. Or, at least one of the one or more metrics indicates or depends on a load of an occasion 18-N occurring last in time among multiple occasions 18-1, 18-2,... 18-N from which the wireless device 14 is to select the occasion in which to transmit a random access preamble 16. In some examples, the at least one of the one or more metrics comprises a number of random access channel transmissions, a latency to complete a random access procedure, a number of retransmission attempts for a random access procedure, or a ratio of a number of successful random access procedure attempts to a total number of random access procedure attempts over a defined time period.

Alternatively or additionally, at least one of the one or more metrics indicates or depends on listen-before-talk failure statistics. For example, in some examples, the listen-before-talk failure statistics comprises listen-before-talk failure statistics for random access or for random access preamble transmissions.

In still other examples, at least one of the one or more metrics may be determined from measurements performed during a previous random access channel slot.

In other examples, the selection method choice 24 is based on whether or how many times the wireless device 14 has failed to successfully complete a random access procedure by transmitting a random access preamble in an occasion 18-N that occurs last in time among multiple occasions 18-1, 18-2,...18-N.

Alternatively or additionally, the selection method choice 24 may be based on a radio resource control, RRC, state of the wireless device 14. For example, the wireless device 14 may choose selection method 22-2 if the wireless device is in an RRC connected state, but choose selection method 22-1 if the wireless device 14 is in an RRC idle or an RRC inactive state.

Alternatively or additionally, transmission of the random access preamble 14 may be triggered by arrival of data to be transmitted to or from the wireless device 14 or by an event. In this case, the selection method choice 24 may be based on a priority of the data or the event. For example, the wireless device 14 may choose a random selection method or a last-in-time selection method depending respectively on whether the priority is low or high.

In some examples, the selection method choice 24 is based on whether the wireless device 14 is capable of transmitting a physical uplink shared channel transmission after transmitting the random access preamble 16, without performing a listen-before-talk procedure after transmitting the random access preamble 16.

Note that although Figure 1 shows a simplified example in which there is one occasion at each of different times, in other examples there may be multiple occasions at one or more of the different times. Multiple occasions occurring at the same time may for example be multiplexed in the frequency domain, the code domain, the spatial domain, etc.

Note further that, in some examples as used herein, unlicensed frequency spectrum is frequency spectrum that has not been licensed by a governing body or authority (e.g., the Federal Communications Commission, FCC, in the United States) for exclusive use by one or more licensees. Without being licensed in this way, unlicensed frequency spectrum may be available for use by anyone, without regard to any such license, such that the unlicensed frequency spectrum may effectively be contentious and shared amongst various types of users, technologies, etc. Nonetheless, a prerequisite for transmission in the unlicensed frequency spectrum may be that spectrum must be deemed clear (e.g., via a successful listen-before-talk procedure), so as not to create interference between competing transmissions.

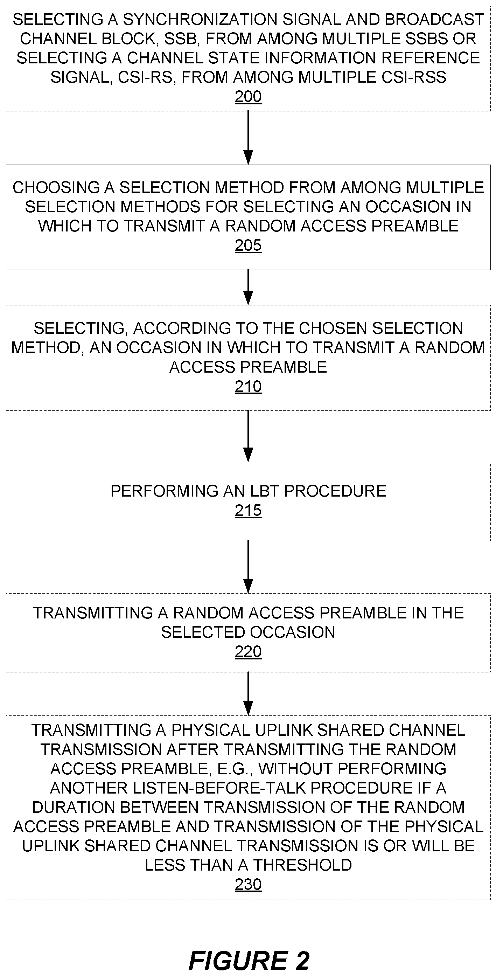

In view of the above modifications and variations, Figure 2 depicts a method performed by a wireless device 14 in accordance with particular examples. The method includes choosing a selection method from among multiple selection methods 22-1, 22-2 for selecting an occasion in which to transmit a random access preamble 16 (Block 205). In some examples, the method also comprises selecting, according to the chosen selection method, an occasion in which to transmit a random access preamble 16 (Block 210). The method may further comprise transmitting a random access preamble 16 in the selected occasion (Block 220).

In some examples, the method further comprises selecting a synchronization signal and broadcast channel block, SSB, from among multiple SSBs or selecting a channel state information reference signal, CSI-RS, from among multiple CSI-RSs (Block 200). In this case, multiple occasions 18-1, 18-2,...18-N from which the wireless device 14 selects the occasion in which to transmit the random access preamble 16 may correspond to the selected SSB or CSI-RS, e.g., wherein different sets of multiple occasions correspond to different ones of the SSBs or CSI-RSs.

In some examples, the method also comprises performing a listen-before-talk procedure before transmitting the random access preamble 16 (Block 215). In this case, transmitting the random access preamble 16 may comprise transmitting the random access preamble 16 if the listen-before-talk procedure succeeds.

In some examples, the method further comprises transmitting a physical uplink shared channel transmission after transmitting the random access preamble 16 (Block 230). The wireless device 14 may do so without performing another listen-before-talk procedure, if a duration between transmission of the random access preamble 16 and transmission of the physical uplink shared channel transmission is or will be less than a threshold.

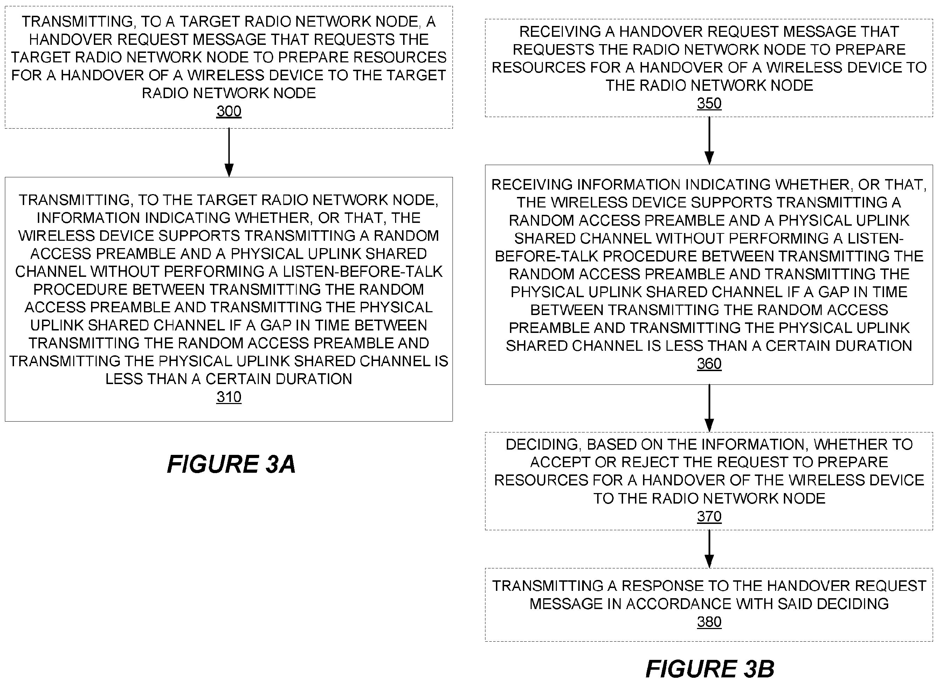

Figure 3A depicts a method performed by a radio network node 12 in accordance with other particular examples. The method may include transmitting, to a target radio network node, a handover request message that requests the target radio network node to prepare resources for a handover of a wireless device 14 to the target radio network node (Block 300). The method may also include transmitting, to the target radio network node, information indicating whether, or that, the wireless device 14 supports transmitting a random access preamble 16 and a physical uplink shared channel without performing a listen-before-talk procedure between transmitting the random access preamble 16 and transmitting the physical uplink shared channel if a gap in time between transmitting the random access preamble 16 and transmitting the physical uplink shared channel is less than a certain duration (Block 310). In some examples, the information is included in the handover request message.

Figure 3B depicts a corresponding method performed by a radio network node in accordance with other examples. The method may comprise receiving a handover request message that requests the radio network node to prepare resources for a handover of a wireless device 14 to the radio network node (Block 350). The method may also comprise receiving information indicating whether, or that, the wireless device 14 supports transmitting a random access preamble 16 and a physical uplink shared channel without performing a listen-before-talk procedure between transmitting the random access preamble 16 and transmitting the physical uplink shared channel if a gap in time between transmitting the random access preamble 16 and transmitting the physical uplink shared channel is less than a certain duration (Block 360). That is, the information may indicate whether, or that, the wireless device 14 supports gapless MsgA as used herein. In some examples, the information is included in the handover request message.

In some examples, the method may also comprise deciding, based on the information, whether to accept or reject the request to prepare resources for a handover of the wireless device 14 to the radio network node (Block 370). The method in this case may further comprise transmitting a response to the handover request message in accordance with said deciding (Block 380).

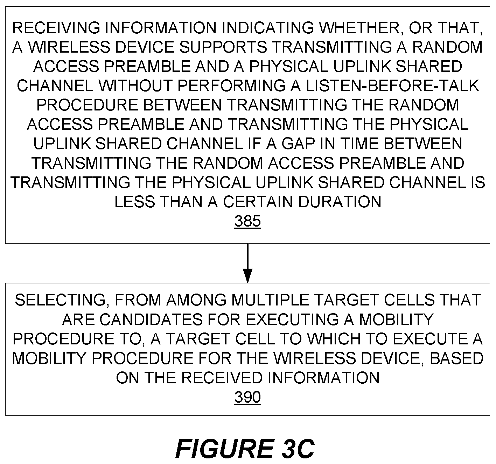

Figure 3C depicts a method performed by a radio network node in accordance with still other examples. The method may comprise receiving information indicating whether, or that, a wireless device 14 supports transmitting a random access preamble 16 and a physical uplink shared channel without performing a listen-before-talk procedure between transmitting the random access preamble 16 and transmitting the physical uplink shared channel if a gap in time between transmitting the random access preamble 16 and transmitting the physical uplink shared channel is less than a certain duration (Block 385). That is, the information may indicate whether, or that, the wireless device 14 supports gapless MsgA as used herein.

In some examples, the method may also comprise selecting, from among multiple target cells that are candidate for executing a mobility procedure to, a target cell to which to execute a mobility procedure for the wireless device, based on the received information (Block 390).

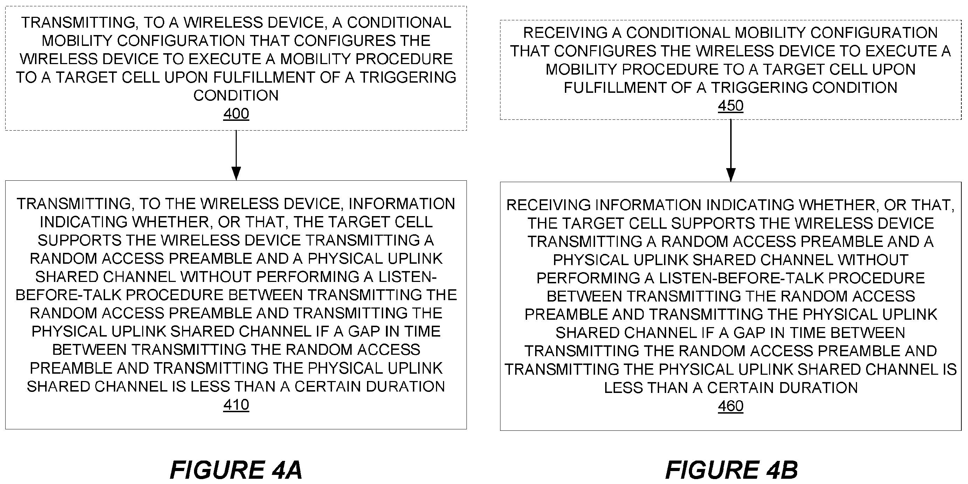

Figure 4A depicts a method performed by a radio network node in accordance with other particular examples. The method may include transmitting, to a wireless device 14, a conditional mobility configuration (e.g., a conditional handover configuration, CHO) that configures the wireless device 14 to execute a mobility procedure to a target cell upon fulfillment of a triggering condition (Block 400). The method may also include transmitting, to the wireless device 14, information indicating whether, or that, the target cell supports the wireless device 14 transmitting a random access preamble 16 and a physical uplink shared channel without performing a listen-before-talk procedure between transmitting the random access preamble 16 and transmitting the physical uplink shared channel if a gap in time between transmitting the random access preamble 16 and transmitting the physical uplink shared channel is less than a certain duration (Block 410). That is, the information may indicate whether, or that, the target cell supports gapless MsgA as used herein. In some examples, the information is included in the conditional mobility configuration.

Figure 4B depicts a corresponding method performed by a wireless device 14 according to some examples. The method may include receiving a conditional mobility configuration that configures the wireless device 14 to execute a mobility procedure to a target cell upon fulfillment of a triggering condition (Block 450). The method may also include receiving information indicating whether, or that, the target cell supports the wireless device 14 transmitting a random access preamble 16 and a physical uplink shared channel without performing a listen-before-talk procedure between transmitting the random access preamble 16 and transmitting the physical uplink shared channel if a gap in time between transmitting the random access preamble 16 and transmitting the physical uplink shared channel is less than a certain duration (Block 460). That is, the information may indicate whether, or that, the target cell supports gapless MsgA as used herein. In some examples, the information is included in the conditional mobility configuration.

In some examples, the method further comprises deciding whether or not to execute the mobility procedure to the target cell based on the received information. Alternatively or additionally, the method may further comprise selecting, from among multiple target cells that are candidates for executing a mobility procedure to, a target cell to which to execute a mobility procedure, based on the received information.

Examples herein also include corresponding apparatuses. Examples herein for instance include a wireless device 14 configured to perform any of the steps of any of the examples described above for the wireless device 14.

Examples also include a wireless device 14 comprising processing circuitry and power supply circuitry. The processing circuitry is configured to perform any of the steps of any of the examples described above for the wireless device 14. The power supply circuitry is configured to supply power to the wireless device 14.

Examples further include a wireless device 14 comprising processing circuitry. The processing circuitry is configured to perform any of the steps of any of the examples described above for the wireless device 14. In some examples, the wireless device 14 further comprises communication circuitry.

Examples further include a wireless device 14 comprising processing circuitry and memory. The memory contains instructions executable by the processing circuitry whereby the wireless device 14 is configured to perform any of the steps of any of the examples described above for the wireless device 14.

Examples moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the examples described above for the wireless device 14. In some examples, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Examples herein also include a radio network node 12 configured to perform any of the steps of any of the examples described above for the radio network node 12.

Examples also include a radio network node 12 comprising processing circuitry and power supply circuitry. The processing circuitry is configured to perform any of the steps of any of the examples described above for the radio network node 12. The power supply circuitry is configured to supply power to the radio network node 12.

Examples further include a radio network node 12 comprising processing circuitry. The processing circuitry is configured to perform any of the steps of any of the examples described above for the radio network node 12. In some examples, the radio network node 12 further comprises communication circuitry.

Examples further include a radio network node 12 comprising processing circuitry and memory. The memory contains instructions executable by the processing circuitry whereby the radio network node 12 is configured to perform any of the steps of any of the examples described above for the radio network node 12.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several examples. In examples that employ memory, the memory stores program code that, when executed by the one or more processors, carries out the techniques described herein.

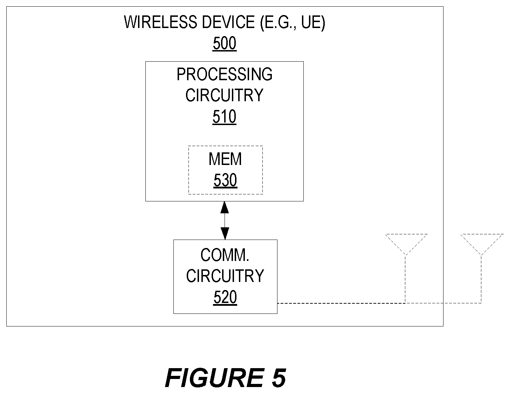

Figure 5 for example illustrates a wireless device 500 (e.g., wireless device 14) as implemented in accordance with one or more examples. As shown, the wireless device 500 includes processing circuitry 510 and communication circuitry 520. The communication circuitry 520 (e.g., radio circuitry) is configured to transmit and/or receive information to and/or from one or more other nodes, e.g., via any communication technology. Such communication may occur via one or more antennas that are either internal or external to the wireless device 500. The processing circuitry 510 is configured to perform processing described above, e.g., in Figure 2 or Figure 4B, such as by executing instructions stored in memory 530. The processing circuitry 510 in this regard may implement certain functional means, units, or modules.

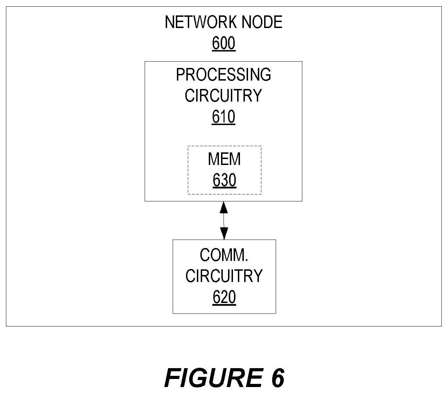

Figure 6 illustrates a network node 600 (e.g., radio network node 12) as implemented in accordance with one or more examples. As shown, the network node 600 includes processing circuitry 610 and communication circuitry 620. The communication circuitry 620 is configured to transmit and/or receive information to and/or from one or more other nodes, e.g., via any communication technology. The processing circuitry 610 is configured to perform processing described above, e.g., in Figure 3A, 3B, or 4A, such as by executing instructions stored in memory 630. The processing circuitry 610 in this regard may implement certain functional means, units, or modules.

Those skilled in the art will also appreciate that examples herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Examples further include a carrier containing such a computer program. This carrier may comprise one of an electronic signal, optical signal, radio signal, or computer readable storage medium.

In this regard, examples herein also include a computer program product stored on a non-transitory computer readable (storage or recording) medium and comprising instructions that, when executed by a processor of an apparatus, cause the apparatus to perform as described above.

Examples further include a computer program product comprising program code portions for performing the steps of any of the examples herein when the computer program product is executed by a computing device. This computer program product may be stored on a computer readable recording medium.

Additional examples will now be described. At least some of these examples may be described as applicable in certain contexts and/or wireless network types for illustrative purposes, but the examples are similarly applicable in other contexts and/or wireless network types not explicitly described.

Some examples, for example, are applicable in a New Radio (NR) system, e.g., whereby the wireless device 14 in Figure 1 is exemplified as a user equipment (UE) and the network node 12 is exemplified as a gNB. In this regard, an NR system may support a wide range of use cases with varying requirements ranging from fully mobile devices to stationary Internet of Things (IoT) or fixed wireless broadband devices. The traffic pattern associated with many use cases may consist of short or long bursts of data traffic with varying length of waiting period in between (here called inactive state). The NR system may support both license assisted access and standalone operation in unlicensed frequency spectrum (NR-U).

With network operation in unlicensed frequency spectrum follows a number of restrictions. One of them is that a device (e.g. a radio network node or a mobile terminal) has to monitor the shared medium, i.e. the channel, and determine that it is free (not being used by any other device) before starting to transmit on the channel. This procedure is referred to as Listen-Before-Talk (LBT) or Clear Channel Assessment (CCA).

More particularly, LBT is designed for unlicensed spectrum co-existence with other radio access technologies (RATs). In this mechanism, a radio device according to some examples applies a clear channel assessment (CCA) check (i.e. channel sensing) before any transmission. For example, the transmitter may perform energy detection (ED) over a time period and compare the detected energy to a certain energy detection threshold (ED threshold) in order to determine if a channel is idle. In case the channel is determined to be occupied, the transmitter may perform a random back-off within a contention window before its next CCA attempt. In order to protect the acknowledgement (ACK) transmissions, the transmitter must defer a period after each busy CCA slot prior to resuming back-off. As soon as the transmitter has grasped access to a channel, the transmitter is only allowed to perform transmission up to a maximum time duration (namely, the maximum channel occupancy time (MCOT)). For quality of service (QoS) differentiation, a channel access priority based on the service type may been defined. For example, four LBT priority classes may be defined for differentiation of channel access priorities between services using different contention window sizes (CWS) and MCOT durations.

In some examples, channel sensing is applied to determine the channel availability before certain physical signal(s) is/are transmitted using the channel. This may be the case, for example, for discovery reference signal (DRS) transmission, such as Primary Synchronization Signal (PSS) / Secondary Synchronization Signal (SSS), Physical Broadcast Channel (PBCH), and Channel State Information Reference Signal (CSI-RS), control channel transmission such as Physical Uplink Control Channel (PUCCH) / Physical Downlink Control Channel (PDCCH), physical data channel such as Physical Uplink Shared Channel (PUSCH) / Physical Downlink Shared Channel (PDSCH), and uplink sounding reference signal (SRS) such as SRS transmission.

In some examples, the NR-U system also needs to support dual connectivity (DC) and standalone scenarios, where the Medium Access Control (MAC) procedures including Random Access Channel (RACH) and the scheduling procedure on unlicensed frequency spectrum are subject to LBT and thus potential LBT failures. This contrasts with Long Term Evolution (LTE) License Assisted Access (LAA), where there are no such issues since the Random Access Channel (RACH) and scheduling related signaling can be transmitted on the PCell in licensed spectrum instead of unlicensed spectrum.

An RA procedure according to some examples may have 4 steps or 2 steps, e.g., as described below.

In some examples, a four-step RA procedure may be referred to as a Type-1 Layer 1 (L1) random access procedure. From the physical layer perspective, the Type-1 L1 random access procedure includes the transmission of random access preamble (Msg1) in a Physical RACH (PRACH), random access response (RAR) message with a Physical Downlink Control Channel (PDCCH) / Physical Downlink Shared Channel (PDSCH) (Msg2), and when applicable, the transmission of a PUSCH scheduled by a RAR uplink grant, and PDSCH for contention resolution.

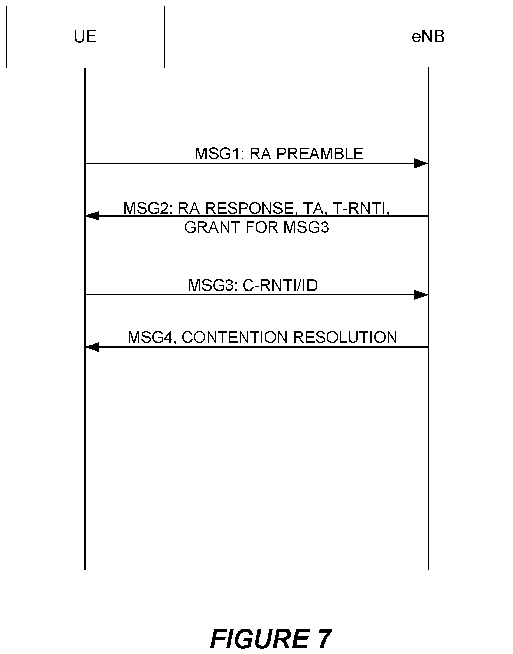

More particularly, the principle of the 2-step RA procedure is shown in Figure 7.

### Step 1: Preamble transmission

The UE randomly selects a RA preamble (*PREAMBLE_INDEX*) which is then transmitted by the UE, e.g., as Msg1. This RA preamble exemplifies the random access preamble 16 shown in Figure 1.

When the eNB detects the preamble, it estimates the Timing alignment (TA) the UE should use in order to obtain uplink (UL) synchronization at the eNB.

### Step 2: RA response (RAR)

The eNB sends a RA response (RAR) including the TA, the temporary cell Radio Network Temporary Identifier (TC-RNTI) (temporary identifier) to be used by the UE, a *Random Access Preamble identifier that* matches the transmitted *PREAMBLE_INDEX* and a grant for Msg3. This RAR is an example of the random access response 30 shown in Figure 1. Regardless, the UE expects the RAR and thus, monitors PDCCH addressed to RA-RNTI to receive the RAR message from the eNB until the configured RAR window (ra-*ResponseWindow)* has expired or until the RAR has been successfully received.

From 3GPP TS 38.321: "The MAC entity may stop ra-ResponseWindow (and hence monitoring for Random Access Response(s)) after successful reception of a Random Access Response containing Random Access Preamble identifiers that matches the transmitted PREAMBLE_INDEX.*"*

### Step 3: "Msg3" (UE ID or UE-specific C-RNTI)

In Msg3, the UE transmits its identifier (UE ID) for initial access or - if it is already in RRC_CONNECTED or RRC_INACTIVE mode and needs to e.g. resync, its UE-specific RNTI.

If the gNB cannot decode Msg3 at the granted UL resources, it may send a downlink control information (DCI) message addressed to TC-RNTI for retransmission of Msg3. Hybrid Automatic Repeat Request (HARQ) retransmission is requested until the UEs restart the random access procedure from step 1 after reaching the maximum number of HARQ retransmissions or until Msg3 can be successfully received by the gNB.

### Step 4: "Msg4" (contention resolution)

In Msg4, the eNB responds by acknowledging the UE ID or C-RNTI. The Msg4 gives contention resolution, i.e. only one UE ID or C-RNTI will be sent even if several UEs have used the same preamble (and the same grant for Msg3 transmission) simultaneously.

For Msg4 reception, the UE monitors TC-RNTI (if it transmitted its UE ID in Msg3) or C-RNTI (if it transmitted its C-RNTI in Msg3).

In LTE, the four-step RA cannot be completed in less than 14 ms / Transmission Time Interval (TTI) / Subframe (SF).

In the four step procedure, one major purpose of the first two messages is to obtain UL time alignment for the UE. In many situations, e.g. in small cells or for stationary UEs, this may not be needed since either a TA =0 will be sufficient (small cells) or a stored TA value from the last RA could serve also for the current RA (stationary UE). In some examples, this may be the case where there are dense deployments of small cells and/or a great number of e.g. stationary loT devices. Some examples therefore employ a two-step RA procedure instead, e.g., in cases where there is no need to obtain the TA value. Generally, in a two-step RA procedure, the UL messages (PRACH + MsgA PUSCH) are sent simultaneously and similarly the two DL messages (e.g. time advance command in RAR and contention resolution information) are sent as a simultaneous response in the DL. This leads to reduced RA latency as compared to the 4-step RA and would be beneficial in several use cases, for example when transmitting infrequent small data packets. On the other hand, the two step RA will consume more resources since it uses contention-based transmission of the data. This means that the resources that are configured for the data transmission may often be unused.

More particularly, a two-step RA procedure according to some examples may be referred to or be a part of a Type-2 Layer 1 random access procedure. From the physical layer perspective, the Type-2 L1 random access procedure includes the transmission of random access preamble in a PRACH and of a PUSCH (MsgA), the reception of a RAR message with a PDCCH/PDSCH (MsgB), and when applicable, the transmission of a PUSCH scheduled by a RAR UL grant, and PDSCH for contention resolution.

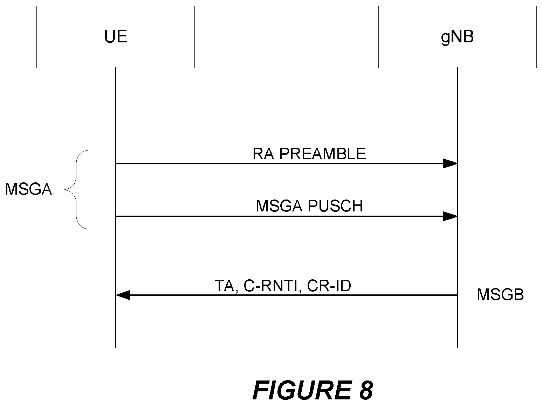

Figure 8 shows additional details of the two-step RA procedure according to some examples. In the two-step RA, the preamble and the msgA PUSCH are transmitted in the same or in two subsequent subframes (msgA). The msgA PUSCH is sent on a resource dedicated to the specific preamble. This means that both the preamble and the Msg 3 face contention but contention resolution in this case means that either both preamble and Msg 3 are sent without collision or both collide. Upon successful reception of msgA, the gNB will respond with a msgB. The msgB may be either a "successRAR", "FallbackRAR or "Back off".

For MsgA with C-RNTI, the UE shall monitor the PDCCH addressed to C-RNTI for success response and msgB-RNTI (e.g. RA-RNTI or new RNTI). If the PDU PDCCH addressed to the C-RNTI (i.e. C-RNTI included in MsgA) containing the 12 bit TA command is received, the UE should consider the contention resolution to be successful and stop the reception of MsgB or with UL grant if the UE is synchronized already.

If the corresponding fallback RAR is detected, the UE should stop the monitoring of PDCCH addressed to the corresponding C-RNTI for success response and process the fallback operation accordingly. Upon receiving the fallbackRAR, the UE shall proceed to msg3 step of 4-step RACH procedure.

If neither corresponding fallback RAR nor PDCCH addressed C-RNTI is detected within the response window, the UE should consider the msgA attempt failed and do back off operation based on the backoff indicator if received in MsgB.

If both the four-step and two-step RA are configured in a cell on shared PRACH resources (and for the UE), the UE will choose its preamble from one specific set if it wants to do a four-step RA, and from another set if it wants to do a two-step RA. Hence a preamble partition is done to distinguish between four-step and two-step RA. Alternatively, the PRACH configurations are different for the two-step and four-step RA procedure, in which case it can be deduced from where the preamble transmission is done if the UE is doing a two-step or four-step procedure.

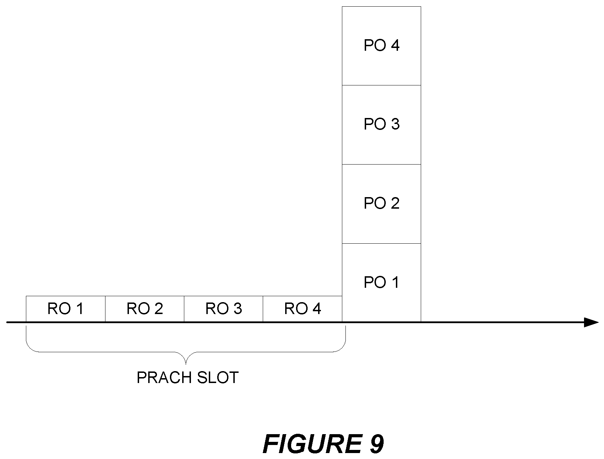

More particularly with regard to 2-step RA, in some configurations, there will be several consecutive PRACH occasions (ROs) within a PRACH slot, where these ROs exemplify the occasions 18-1, 18-2,...18-N shown in Figure 1. Here, the PRACH occasions may be consecutive in the sense that they occur consecutively among PRACH occasions that are valid for PRACH occasions, e.g., valid PRACH occasions may be consecutive in time even if one or more non-valid PRACH occasions are interspersed between them. An example configuration of this type is shown in Figure 9, where 4 ROs are configured in the PRACH slot, as exemplifying the occasions 18-1, 18-2,...18-N in the slot 20 of Figure 1. These 4 ROs in Figure 9 are mapped to 4 PUSCH occasions (POs), e.g. a preamble transmission in RO1 will have its PUSCH transmission in PO 1, etc.

In this regard, a PUSCH occasion for two-step RACH is defined as the time-frequency resource for payload transmission. A PUSCH resource unit (PRU) is the PUSCH occasion and Demodulation Reference Signal (DMRS) port / DMRS sequence used for a MsgA payload transmission. For mapping between preambles in each RO and associated PUSCH resource unit, the design may consider factors such as resource utilization efficiency and decoding complexity at the gNB.

For different RA events and different purposes, the payload size of a MsgA may vary in a range from a few bytes to a few hundred bytes. For better spectral efficiency, different mapping rules between preambles in each RO and associated PUSCH resource unit may include a One-to-One Mapping, a Many-to-One Mapping, and a One-to-Many Mapping.

Multiple msgA PUSCH configurations are possible in some examples. Different MsgA PUSCH configurations may be of different properties in terms of the configuration periodicity, PO size (i.e., the resource size associated with the PO), number of POs/PRUs within each configuration period, modulation and coding scheme (MCS), etc. These properties would affect the data transmission performance in terms of QoS indicators such as latency, transmission reliability and transport block (TB) size. The different configurations could enable the UE to select a TB size suitable to the number of bits it needs to transmit or the reliability it needs. For example, a UE that only needs to obtain time alignment may select a smaller PUSCH resource than a UE doing initial access which would require transmission of an RRC message in msgA.

In some examples, for separately configured 2-step RACH and 4-step RACH ROs, if 2-step RACH ROs overlap with 4-step RACH ROs in time and frequency, the 2-step RACH ROs become invalid.

In some examples, *M* preambles are mapped to one PRU, where *M*=ceiling(N_pre/N_pru) and where *N_pre* and *N_pru* are respectively the total numbers of valid preambles and valid PRUs in the SSB-to-RO association pattern period. Each M (M>=1) consecutive PRACH preambles may be mapped to valid PUSCH resource units (PRUs) in the following order. First, in increasing order of frequency resource indexes for frequency multiplexed PUSCH occasions. Second, in increasing order of DMRS indexes within a single PUSCH occasion. Third, in increasing order of time resource indexes for time multiplexed PUSCH occasions within a PUSCH slot. Fourth, in increasing order of indexes for PUSCH slots

In some examples, the minimum transmission gap between the end of msgA PRACH and the beginning of msgA PUSCH (guard time excluded) is no less than Ngap symbols, as specified in TS 38.213, i.e., 2 or 4 symbols depending on the subcarrier spacing (SCS). However, this is not applied for NR-U in some examples,

In any event, some examples herein address an issue that may occur in the 2-step RA procedure in NR-U. In particular, the UE heretofore will randomly select one of the ROs for its preamble transmission in the 2-step RA procedure, e.g., as follows:
"1> determine the next available PRACH occasion from the PRACH occasions corresponding to the selected SSB (the MAC entity shall select a PRACH occasion randomly with equal probability among the consecutive PRACH occasions allocated for 2-step random access according to subclause 8.1 of TS 38.213 [6], corresponding to the selected SSB; the MAC entity may take into account the possible occurrence of measurement gaps when determining the next available PRACH occasion corresponding to the selected SSB)"

For NR-U, though, the UE will have to do an LBT before transmitting the preamble in the selected RO. In case the selected RO is RO 4, there is no gap (more or equal to 16 µs) between the RO and the PO where the msgA PUSCH is transmitted. In this case, the UE does not do a new LBT when transmitting msgA PUSCH. However, in case the selected RO is e.g., RO 1 there is a gap (longer than 16 µs) between the RO and the PO where the msgA PUSCH is transmitted. In this case, the UE is forced to do a new LBT when transmitting msgA PUSCH. Doing a new LBT will increase the probability that the msgA transmission fails due to unsuccessful LBT.

Accordingly, in NR-U scenarios, for a 2-step RA based transmission, transmission of msgA using at most one LBT is beneficial, especially in cases when channel occupancy is high. Using a single LBT prior to transmission of a MsgA means that the gap between the preamble and the payload needs to be sufficiently short, i.e. less than 16us, i.e., also referred to as gap-less MsgA herein. However, if there are PRACH configurations with several ROs in a PRACH slot, it is only in the last RO which is closest to the PO in time where a PRACH and PUSCH may be transmitted using the same LBT. Random selection of the RO to use therefore cannot always support gapless MsgA transmission, e.g., which may be needed for some services that require short latency. On the other hand, if all UEs in a cell configured with gap-less MsgA were to try to use the last RO in every PRACH slot, it would cause a higher occurrence of LBT failures in case RACH load is high.

Certain aspects of the present disclosure and their examples may provide solutions to these or other challenges. Some examples herein include methods to distinguish when a UE should randomly select RO among consecutive ROs in a PRACH slot (e.g., using a random selection method described herein) and when the UE is allowed or mandated to select the last RO in a PRACH slot (e.g., using a last-in-time selection method described herein). In some examples, the UE selects the last RO only in case the last RO is not congested. If there is high RA load or high number of LBT failures in the last RO, the UE will randomly select a RO instead of using the last RO. Some examples may thereby efficiently decide whether the UE should randomly select RO or transmit in the last RO.

For example, in a first embodiment, in a cell supporting gap-less MsgA transmission, upon triggering of a random access event, a UE initiates a 2-step RA procedure by either selecting the last RO in a PRACH slot for preamble transmission of a MsgA or by randomly selecting a RO of consecutive ROs in a PRACH slot. Here, selecting the last RO in a PRACH slot for preamble transmission may be an example of the selection method 22-1 in Figure 1, whereas randomly selecting a RO for preamble transmission may be an example of the selection method 22-2 in Figure 1, Regardless, the choice between these two procedures (selecting the last RO and randomly selecting an RO) in some examples is based on at least one of the below metrics: (i) channel occupancy; (ii) PRACH load; (iii) LBT (or CCA) failure statistics.

PRACH load may for example be reflected by a number of RACH transmissions, latency of the UE to complete the RA procedure, and/or retransmission attempts/ratio for a RACH procedure.

LBT (or CCA) failure statistics may include for example a number of LBT/CCA failure occurrences or a ratio of the LBT/CCA failures versus the total number of LBT/CCA attempts. In one alternative, the LBT failure statistics may be measured by the UE only counting LBT operations for RACH. This may be LBT statistics (LBT success/LBT failure) of the UE's previous transmissions, or this may be LBT statistics (LBT success/LBT failure) of the UE's previous preamble transmissions. In another alternative, the LBT failure statistics may be measured by the UE counting LBT operations for all UL transmissions, including RACH, sounding reference signal (SRS), Physical Uplink Control Channel (PUCCH), and Physical Uplink Shared Channel (PUSCH). Again, the LBT failure statistics may be LBT statistics (LBT success/LBT failure) of the UEs previous transmissions, or may be LBT statistics (LBT success/LBT failure) of the UEs previous preamble transmissions.

In some examples, measurements on previous ROs in both time and frequency may be performed. Such measurement may include at least the last ROs in previous PRACH slots, all ROs in previous PRACH slot, or all but the last ROs in previous PRACH slots.

In one or more examples, the measurements may be performed by the UE only in the relevant frequency regions where the concerned LBT/CCA operations take place. The relevant frequency regions may for example correspond to a cell, carrier, bandwidth part (BWP), channel, or LBT subband where the concerned LBT/CCA operations take place.

The gNB may also signal measurement results reported by other UEs to UEs. This signaling may be done via System Information Block (SIB) signaling, dedicated radio resource control (RRC) signaling, Medium Access Control (MAC) Control Element (CE), or Downlink Control Information (DCI).

In some examples, the UE is configured to use one or multiple of the above metrics to measure the last RO in a PRACH slot. A measurement window in the time domain may be defined accordingly. The UE transmits the preamble in the last RO if the used metric measured in the last RO is below a configured threshold. Otherwise, the UE randomly selects a RO in the PRACH slot (i.e., the random selection can be performed among the non-last ROs or all ROs including the last RO) to transmit the preamble.

In a second example, if the UE has tried N msgA transmissions by selecting the last RO in a PRACH slot, yet the UE can not receive the MsgB corresponding to the MsgA or the UE can not succeed with the contention resolution for the MsgA, the UE is allowed to select another non-last RO in the next attempt. Alternatively, the UE is allowed to randomly select a RO among all ROs including the last RO to retransmit the MsgA.

In a third example, the UE can select the last RO if it is in connected mode and a UE in idle or inactive mode can randomly select among the consecutive ROs.

In a fourth example, the priority of the data or the event that triggered the random access will govern if the UE is allowed to select the last RO or must select randomly among the consecutive ROs. In this way, it is only RAs with high priority or critical latency requirements that are allowed to use the last RO. The other RAs with low priority or non-critical latency requirements would use the non-last ROs.

In a fifth example, a UE capability on if the UE shall perform gap-less MsgA transmission is defined. In this way, it is only the UE configured with gap-less MsgA transmission which will use the last RO in a PRACH slot to transmit MsgA.

Note here that the first, second, third, fourth, and fifth examples exemplify various aspects of the method shown in Figure 2, e.g., in particular Step 205 for choosing a selection method for selecting an occasion in which to transmit a random access preamble.

In a sixth example, in case a handover is triggered for a UE, the UE sends measurement reports to its serving gNB, and the serving gNB selects a target cell based on the UE's capability of gap-less MsgA so that the selected target cell is fulfilling the UE's capability. In other words, for a UE not supporting gap-less MsgA, the gNB selects a target cell which is not configured with gap-less MsgA, and for a UE supporting gap-less MsgA, the gNB selects a target cell which is configured with gap-less MsgA. Note here that the sixth example exemplifies various aspects of the method shown in Figure 3C from the perspective of the serving gNB.

In a seventh example, in case a handover is triggered for a UE, the UE sends measurement reports to its serving gNB, and the serving gNB includes the information on whether the UE supports gap-less transmission in a handover request message, and sends the handover request message to a target cell. The target cell can decide if the handover request for the UE should be accepted or rejected. Note here that the seventh example exemplifies various aspects of the method shown in Figure 3A from the perspective of the serving gNB and the method shown in Figure 3B from the perspective of the target cell.

In an eighth example, for a UE configured with conditional handover, the gNB configures the target cell candidates for the UE. Each candidate cell configuration would indicate if the cell is configured with gap-less MsgA transmission. In case a conditional handover is triggered, the UE selects the target cell candidate to perform the handover considering if the cell supports gap-less MsgA. Note here that the eighth example exemplifies various aspects of the method shown in Figure 4A from the perspective of the gNB and the method shown in Figure 4B from the perspective of the UE.

Certain examples may provide one or more of the following technical advantage(s): (i) the probability of performing RA without LBT failure is increased; (ii) the random access performance will be enhanced; and/or (iii) the QoS of the associated services are enhanced.

Some examples are applicable to both unlicensed and licensed spectrum. NR-U is one example of an unlicensed spectrum scenario. Other examples herein are also applicable to other unlicensed operation scenarios such as LTE LAA/eLAA/feLAA /MulteFire.

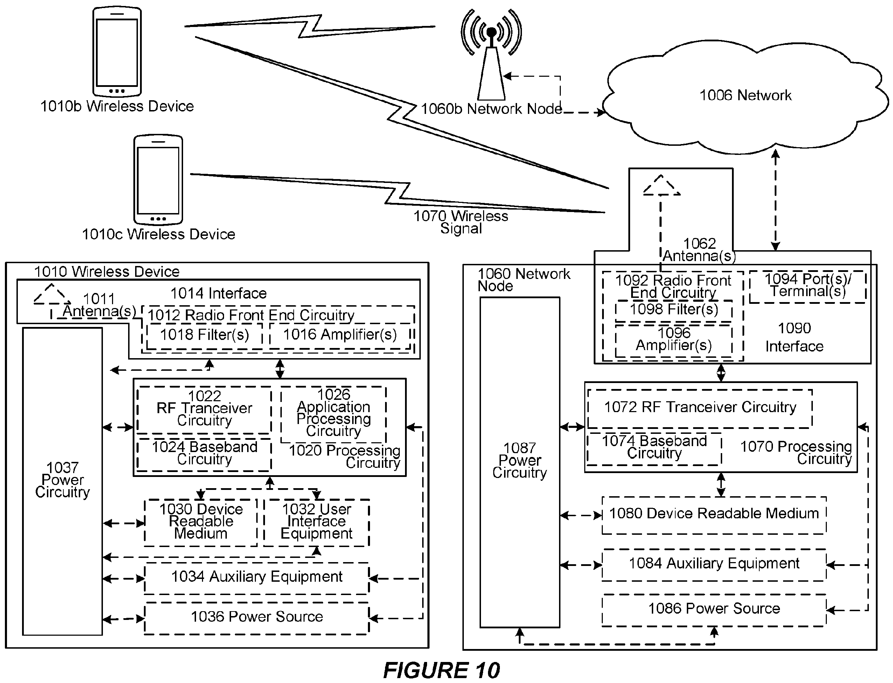

Although the subject matter described herein may be implemented in any appropriate type of system using any suitable components, the examples disclosed herein are described in relation to a wireless network, such as the example wireless network illustrated in Figure 10. For simplicity, the wireless network of Figure 10 only depicts network 1006, network nodes 1060 and 1060b, and WDs 1010, 1010b, and 1010c. In practice, a wireless network may further include any additional elements suitable to support communication between wireless devices or between a wireless device and another communication device, such as a landline telephone, a service provider, or any other network node or end device. Of the illustrated components, network node 1060 and wireless device (WD) 1010 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some examples, the wireless network may be configured to operate according to specific standards or other types of predefined rules or procedures. Thus, particular examples of the wireless network may implement communication standards, such as Global System for Mobile Communications (GSM), Universal Mobile Telecommunications System (UMTS), Long Term Evolution (LTE), Narrowband Internet of Things (NB-IoT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1006 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1060 and WD 1010 comprise various components described in more detail below. These components work together in order to provide network node and/or wireless device functionality, such as providing wireless connections in a wireless network. In different examples, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 10, network node 1060 includes processing circuitry 1070, device readable medium 1080, interface 1090, auxiliary equipment 1084, power source 1086, power circuitry 1087, and antenna 1062. Although network node 1060 illustrated in the example wireless network of Figure 10 may represent a device that includes the illustrated combination of hardware components, other examples may comprise network nodes with different combinations of components. It is to be understood that a network node comprises any suitable combination of hardware and/or software needed to perform the tasks, features, functions and methods disclosed herein. Moreover, while the components of network node 1060 are depicted as single boxes located within a larger box, or nested within multiple boxes, in practice, a network node may comprise multiple different physical components that make up a single illustrated component (e.g., device readable medium 1080 may comprise multiple separate hard drives as well as multiple RAM modules).

Similarly, network node 1060 may be composed of multiple physically separate components (e.g., a NodeB component and a RNC component, or a BTS component and a BSC component, etc.), which may each have their own respective components. In certain scenarios in which network node 1060 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some examples, network node 1060 may be configured to support multiple radio access technologies (RATs). In such examples, some components may be duplicated (e.g., separate device readable medium 1080 for the different RATs) and some components may be reused (e.g., the same antenna 1062 may be shared by the RATs). Network node 1060 may also include multiple sets of the various illustrated components for different wireless technologies integrated into network node 1060, such as, for example, GSM, WCDMA, LTE, NR, WiFi, or Bluetooth wireless technologies. These wireless technologies may be integrated into the same or different chip or set of chips and other components within network node 1060.

Processing circuitry 1070 is configured to perform any determining, calculating, or similar operations (e.g., certain obtaining operations) described herein as being provided by a network node. These operations performed by processing circuitry 1070 may include processing information obtained by processing circuitry 1070 by, for example, converting the obtained information into other information, comparing the obtained information or converted information to information stored in the network node, and/or performing one or more operations based on the obtained information or converted information, and as a result of said processing making a determination.

Processing circuitry 1070 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1060 components, such as device readable medium 1080, network node 1060 functionality. For example, processing circuitry 1070 may execute instructions stored in device readable medium 1080 or in memory within processing circuitry 1070. Such functionality may include providing any of the various wireless features, functions, or benefits discussed herein. In some examples, processing circuitry 1070 may include a system on a chip (SOC).

In some examples, processing circuitry 1070 may include one or more of radio frequency (RF) transceiver circuitry 1072 and baseband processing circuitry 1074. In some examples, radio frequency (RF) transceiver circuitry 1072 and baseband processing circuitry 1074 may be on separate chips (or sets of chips), boards, or units, such as radio units and digital units. In alternative examples, part or all of RF transceiver circuitry 1072 and baseband processing circuitry 1074 may be on the same chip or set of chips, boards, or units

In certain examples, some or all of the functionality described herein as being provided by a network node, base station, eNB or other such network device may be performed by processing circuitry 1070 executing instructions stored on device readable medium 1080 or memory within processing circuitry 1070. In alternative examples, some or all of the functionality may be provided by processing circuitry 1070 without executing instructions stored on a separate or discrete device readable medium, such as in a hard-wired manner. In any of those examples, whether executing instructions stored on a device readable storage medium or not, processing circuitry 1070 can be configured to perform the described functionality. The benefits provided by such functionality are not limited to processing circuitry 1070 alone or to other components of network node 1060, but are enjoyed by network node 1060 as a whole, and/or by end users and the wireless network generally.

Device readable medium 1080 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1070. Device readable medium 1080 may store any suitable instructions, data or information, including a computer program, software, an application including one or more of logic, rules, code, tables, etc. and/or other instructions capable of being executed by processing circuitry 1070 and, utilized by network node 1060. Device readable medium 1080 may be used to store any calculations made by processing circuitry 1070 and/or any data received via interface 1090. In some examples, processing circuitry 1070 and device readable medium 1080 may be considered to be integrated.

Interface 1090 is used in the wired or wireless communication of signalling and/or data between network node 1060, network 1006, and/or WDs 1010. As illustrated, interface 1090 comprises port(s)/terminal(s) 1094 to send and receive data, for example to and from network 1006 over a wired connection. Interface 1090 also includes radio front end circuitry 1092 that may be coupled to, or in certain examples a part of, antenna 1062. Radio front end circuitry 1092 comprises filters 1098 and amplifiers 1096. Radio front end circuitry 1092 may be connected to antenna 1062 and processing circuitry 1070. Radio front end circuitry may be configured to condition signals communicated between antenna 1062 and processing circuitry 1070. Radio front end circuitry 1092 may receive digital data that is to be sent out to other network nodes or WDs via a wireless connection. Radio front end circuitry 1092 may convert the digital data into a radio signal having the appropriate channel and bandwidth parameters using a combination of filters 1098 and/or amplifiers 1096. The radio signal may then be transmitted via antenna 1062. Similarly, when receiving data, antenna 1062 may collect radio signals which are then converted into digital data by radio front end circuitry 1092. The digital data may be passed to processing circuitry 1070. In other examples, the interface may comprise different components and/or different combinations of components.

In certain alternative examples, network node 1060 may not include separate radio front end circuitry 1092, instead, processing circuitry 1070 may comprise radio front end circuitry and may be connected to antenna 1062 without separate radio front end circuitry 1092. Similarly, in some examples, all or some of RF transceiver circuitry 1072 may be considered a part of interface 1090. In still other examples, interface 1090 may include one or more ports or terminals 1094, radio front end circuitry 1092, and RF transceiver circuitry 1072, as part of a radio unit (not shown), and interface 1090 may communicate with baseband processing circuitry 1074, which is part of a digital unit (not shown).

Antenna 1062 may include one or more antennas, or antenna arrays, configured to send and/or receive wireless signals. Antenna 1062 may be coupled to radio front end circuitry 1090 and may be any type of antenna capable of transmitting and receiving data and/or signals wirelessly. In some examples, antenna 1062 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain examples, antenna 1062 may be separate from network node 1060 and may be connectable to network node 1060 through an interface or port.

Antenna 1062, interface 1090, and/or processing circuitry 1070 may be configured to perform any receiving operations and/or certain obtaining operations described herein as being performed by a network node. Any information, data and/or signals may be received from a wireless device, another network node and/or any other network equipment. Similarly, antenna 1062, interface 1090, and/or processing circuitry 1070 may be configured to perform any transmitting operations described herein as being performed by a network node. Any information, data and/or signals may be transmitted to a wireless device, another network node and/or any other network equipment.

Power circuitry 1087 may comprise, or be coupled to, power management circuitry and is configured to supply the components of network node 1060 with power for performing the functionality described herein. Power circuitry 1087 may receive power from power source 1086. Power source 1086 and/or power circuitry 1087 may be configured to provide power to the various components of network node 1060 in a form suitable for the respective components (e.g., at a voltage and current level needed for each respective component). Power source 1086 may either be included in, or external to, power circuitry 1087 and/or network node 1060. For example, network node 1060 may be connectable to an external power source (e.g., an electricity outlet) via an input circuitry or interface such as an electrical cable, whereby the external power source supplies power to power circuitry 1087. As a further example, power source 1086 may comprise a source of power in the form of a battery or battery pack which is connected to, or integrated in, power circuitry 1087. The battery may provide backup power should the external power source fail. Other types of power sources, such as photovoltaic devices, may also be used.

Alternative examples of network node 1060 may include additional components beyond those shown in Figure 10 that may be responsible for providing certain aspects of the network node's functionality, including any of the functionality described herein and/or any functionality necessary to support the subject matter described herein. For example, network node 1060 may include user interface equipment to allow input of information into network node 1060 and to allow output of information from network node 1060. This may allow a user to perform diagnostic, maintenance, repair, and other administrative functions for network node 1060.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some examples, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1010 includes antenna 1011, interface 1014, processing circuitry 1020, device readable medium 1030, user interface equipment 1032, auxiliary equipment 1034, power source 1036 and power circuitry 1037. WD 1010 may include multiple sets of one or more of the illustrated components for different wireless technologies supported by WD 1010, such as, for example, GSM, WCDMA, LTE, NR, WiFi, WiMAX, NB-loT, or Bluetooth wireless technologies, just to mention a few. These wireless technologies may be integrated into the same or different chips or set of chips as other components within WD 1010.

Antenna 1011 may include one or more antennas or antenna arrays, configured to send and/or receive wireless signals, and is connected to interface 1014. In certain alternative examples, antenna 1011 may be separate from WD 1010 and be connectable to WD 1010 through an interface or port. Antenna 1011, interface 1014, and/or processing circuitry 1020 may be configured to perform any receiving or transmitting operations described herein as being performed by a WD. Any information, data and/or signals may be received from a network node and/or another WD. In some examples, radio front end circuitry and/or antenna 1011 may be considered an interface.

As illustrated, interface 1014 comprises radio front end circuitry 1012 and antenna 1011. Radio front end circuitry 1012 comprise one or more filters 1018 and amplifiers 1016. Radio front end circuitry 1014 is connected to antenna 1011 and processing circuitry 1020, and is configured to condition signals communicated between antenna 1011 and processing circuitry 1020. Radio front end circuitry 1012 may be coupled to or a part of antenna 1011. In some examples, WD 1010 may not include separate radio front end circuitry 1012; rather, processing circuitry 1020 may comprise radio front end circuitry and may be connected to antenna 1011. Similarly, in some examples, some or all of RF transceiver circuitry 1022 may be considered a part of interface 1014. Radio front end circuitry 1012 may receive digital data that is to be sent out to other network nodes or WDs via a wireless connection. Radio front end circuitry 1012 may convert the digital data into a radio signal having the appropriate channel and bandwidth parameters using a combination of filters 1018 and/or amplifiers 1016. The radio signal may then be transmitted via antenna 1011. Similarly, when receiving data, antenna 1011 may collect radio signals which are then converted into digital data by radio front end circuitry 1012. The digital data may be passed to processing circuitry 1020. In other examples, the interface may comprise different components and/or different combinations of components.

Processing circuitry 1020 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1010 components, such as device readable medium 1030, WD 1010 functionality. Such functionality may include providing any of the various wireless features or benefits discussed herein. For example, processing circuitry 1020 may execute instructions stored in device readable medium 1030 or in memory within processing circuitry 1020 to provide the functionality disclosed herein.

As illustrated, processing circuitry 1020 includes one or more of RF transceiver circuitry 1022, baseband processing circuitry 1024, and application processing circuitry 1026. In other examples, the processing circuitry may comprise different components and/or different combinations of components. In certain examples processing circuitry 1020 of WD 1010 may comprise a SOC. In some examples, RF transceiver circuitry 1022, baseband processing circuitry 1024, and application processing circuitry 1026 may be on separate chips or sets of chips. In alternative examples, part or all of baseband processing circuitry 1024 and application processing circuitry 1026 may be combined into one chip or set of chips, and RF transceiver circuitry 1022 may be on a separate chip or set of chips. In still alternative examples, part or all of RF transceiver circuitry 1022 and baseband processing circuitry 1024 may be on the same chip or set of chips, and application processing circuitry 1026 may be on a separate chip or set of chips. In yet other alternative examples, part or all of RF transceiver circuitry 1022, baseband processing circuitry 1024, and application processing circuitry 1026 may be combined in the same chip or set of chips. In some examples, RF transceiver circuitry 1022 may be a part of interface 1014. RF transceiver circuitry 1022 may condition RF signals for processing circuitry 1020.

In certain examples, some or all of the functionality described herein as being performed by a WD may be provided by processing circuitry 1020 executing instructions stored on device readable medium 1030, which in certain examples may be a computer-readable storage medium. In alternative examples, some or all of the functionality may be provided by processing circuitry 1020 without executing instructions stored on a separate or discrete device readable storage medium, such as in a hard-wired manner. In any of those particular examples, whether executing instructions stored on a device readable storage medium or not, processing circuitry 1020 can be configured to perform the described functionality. The benefits provided by such functionality are not limited to processing circuitry 1020 alone or to other components of WD 1010, but are enjoyed by WD 1010 as a whole, and/or by end users and the wireless network generally.

Processing circuitry 1020 may be configured to perform any determining, calculating, or similar operations (e.g., certain obtaining operations) described herein as being performed by a WD. These operations, as performed by processing circuitry 1020, may include processing information obtained by processing circuitry 1020 by, for example, converting the obtained information into other information, comparing the obtained information or converted information to information stored by WD 1010, and/or performing one or more operations based on the obtained information or converted information, and as a result of said processing making a determination.

Device readable medium 1030 may be operable to store a computer program, software, an application including one or more of logic, rules, code, tables, etc. and/or other instructions capable of being executed by processing circuitry 1020. Device readable medium 1030 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1020. In some examples, processing circuitry 1020 and device readable medium 1030 may be considered to be integrated.

User interface equipment 1032 may provide components that allow for a human user to interact with WD 1010. Such interaction may be of many forms, such as visual, audial, tactile, etc. User interface equipment 1032 may be operable to produce output to the user and to allow the user to provide input to WD 1010. The type of interaction may vary depending on the type of user interface equipment 1032 installed in WD 1010. For example, if WD 1010 is a smart phone, the interaction may be via a touch screen; if WD 1010 is a smart meter, the interaction may be through a screen that provides usage (e.g., the number of gallons used) or a speaker that provides an audible alert (e.g., if smoke is detected). User interface equipment 1032 may include input interfaces, devices and circuits, and output interfaces, devices and circuits. User interface equipment 1032 is configured to allow input of information into WD 1010, and is connected to processing circuitry 1020 to allow processing circuitry 1020 to process the input information. User interface equipment 1032 may include, for example, a microphone, a proximity or other sensor, keys/buttons, a touch display, one or more cameras, a USB port, or other input circuitry. User interface equipment 1032 is also configured to allow output of information from WD 1010, and to allow processing circuitry 1020 to output information from WD 1010. User interface equipment 1032 may include, for example, a speaker, a display, vibrating circuitry, a USB port, a headphone interface, or other output circuitry. Using one or more input and output interfaces, devices, and circuits, of user interface equipment 1032, WD 1010 may communicate with end users and/or the wireless network, and allow them to benefit from the functionality described herein.

Auxiliary equipment 1034 is operable to provide more specific functionality which may not be generally performed by WDs. This may comprise specialized sensors for doing measurements for various purposes, interfaces for additional types of communication such as wired communications etc. The inclusion and type of components of auxiliary equipment 1034 may vary depending on the example and/or scenario.

Power source 1036 may, in some examples, be in the form of a battery or battery pack. Other types of power sources, such as an external power source (e.g., an electricity outlet), photovoltaic devices or power cells, may also be used. WD 1010 may further comprise power circuitry 1037 for delivering power from power source 1036 to the various parts of WD 1010 which need power from power source 1036 to carry out any functionality described or indicated herein. Power circuitry 1037 may in certain examples comprise power management circuitry. Power circuitry 1037 may additionally or alternatively be operable to receive power from an external power source; in which case WD 1010 may be connectable to the external power source (such as an electricity outlet) via input circuitry or an interface such as an electrical power cable. Power circuitry 1037 may also in certain examples be operable to deliver power from an external power source to power source 1036. This may be, for example, for the charging of power source 1036. Power circuitry 1037 may perform any formatting, converting, or other modification to the power from power source 1036 to make the power suitable for the respective components of WD 1010 to which power is supplied.

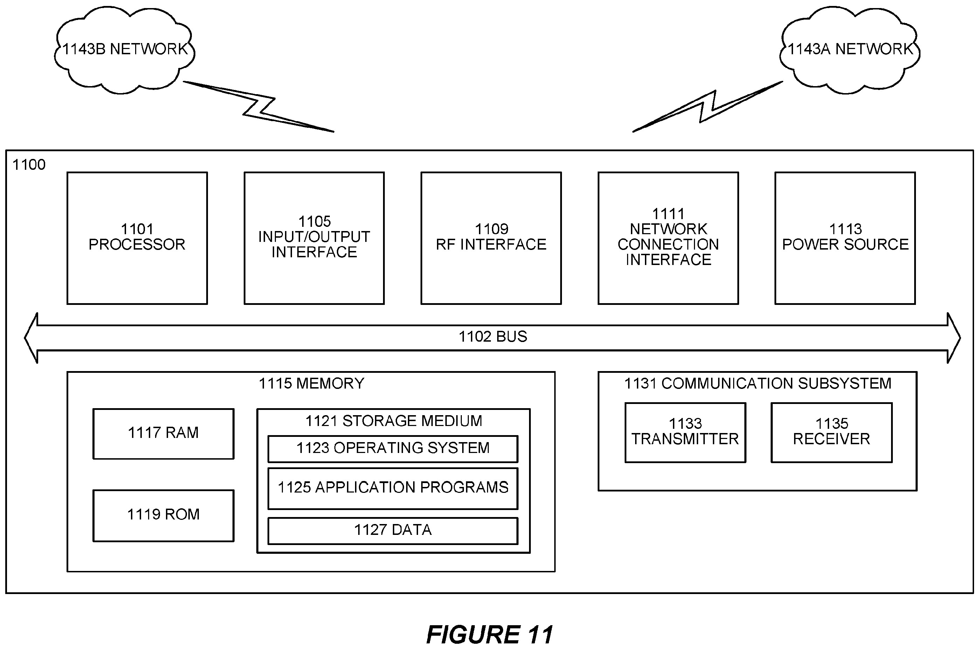

Figure 11 illustrates one example of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 11200 may be any UE identified by the 3^{rd} Generation Partnership Project (3GPP), including a NB-loT UE, a machine type communication (MTC) UE, and/or an enhanced MTC (eMTC) UE. UE 1100, as illustrated in Figure 11, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 11 is a UE, the components discussed herein are equally applicable to a WD, and vice-versa.

In Figure 11, UE 1100 includes processing circuitry 1101 that is operatively coupled to input/output interface 1105, radio frequency (RF) interface 1109, network connection interface 1111, memory 1115 including random access memory (RAM) 1117, read-only memory (ROM) 1119, and storage medium 1121 or the like, communication subsystem 1131, power source 1133, and/or any other component, or any combination thereof. Storage medium 1121 includes operating system 1123, application program 1125, and data 1127. In other examples, storage medium 1121 may include other similar types of information. Certain UEs may utilize all of the components shown in Figure 11, or only a subset of the components. The level of integration between the components may vary from one UE to another UE. Further, certain UEs may contain multiple instances of a component, such as multiple processors, memories, transceivers, transmitters, receivers, etc.

In Figure 11, processing circuitry 1101 may be configured to process computer instructions and data. Processing circuitry 1101 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1101 may include two central processing units (CPUs). Data may be information in a form suitable for use by a computer.

In the depicted embodiment, input/output interface 1105 may be configured to provide a communication interface to an input device, output device, or input and output device. UE 1100 may be configured to use an output device via input/output interface 1105. An output device may use the same type of interface port as an input device. For example, a USB port may be used to provide input to and output from UE 1100. The output device may be a speaker, a sound card, a video card, a display, a monitor, a printer, an actuator, an emitter, a smartcard, another output device, or any combination thereof. UE 1100 may be configured to use an input device via input/output interface 1105 to allow a user to capture information into UE 1100. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 11, RF interface 1109 may be configured to provide a communication interface to RF components such as a transmitter, a receiver, and an antenna. Network connection interface 1111 may be configured to provide a communication interface to network 1143a. Network 1143a may encompass wired and/or wireless networks such as a local-area network (LAN), a wide-area network (WAN), a computer network, a wireless network, a telecommunications network, another like network or any combination thereof. For example, network 1143a may comprise a Wi-Fi network. Network connection interface 1111 may be configured to include a receiver and a transmitter interface used to communicate with one or more other devices over a communication network according to one or more communication protocols, such as Ethernet, TCP/IP, SONET, ATM, or the like. Network connection interface 1111 may implement receiver and transmitter functionality appropriate to the communication network links (e.g., optical, electrical, and the like). The transmitter and receiver functions may share circuit components, software or firmware, or alternatively may be implemented separately.

RAM 1117 may be configured to interface via bus 1102 to processing circuitry 1101 to provide storage or caching of data or computer instructions during the execution of software programs such as the operating system, application programs, and device drivers. ROM 1119 may be configured to provide computer instructions or data to processing circuitry 1101. For example, ROM 1119 may be configured to store invariant low-level system code or data for basic system functions such as basic input and output (I/O), startup, or reception of keystrokes from a keyboard that are stored in a non-volatile memory. Storage medium 1121 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1121 may be configured to include operating system 1123, application program 1125 such as a web browser application, a widget or gadget engine or another application, and data file 1127. Storage medium 1121 may store, for use by UE 1100, any of a variety of various operating systems or combinations of operating systems.

Storage medium 1121 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1121 may allow UE 1100 to access computer-executable instructions, application programs or the like, stored on transitory or non-transitory memory media, to off-load data, or to upload data. An article of manufacture, such as one utilizing a communication system may be tangibly embodied in storage medium 1121, which may comprise a device readable medium.

In Figure 11, processing circuitry 1101 may be configured to communicate with network 1143b using communication subsystem 1131. Network 1143a and network 1143b may be the same network or networks or different network or networks. Communication subsystem 1131 may be configured to include one or more transceivers used to communicate with network 1143b. For example, communication subsystem 1131 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1133 and/or receiver 1135 to implement transmitter or receiver functionality, respectively, appropriate to the RAN links (e.g., frequency allocations and the like). Further, transmitter 1133 and receiver 1135 of each transceiver may share circuit components, software or firmware, or alternatively may be implemented separately.

In the illustrated embodiment, the communication functions of communication subsystem 1131 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1131 may include cellular communication, Wi-Fi communication, Bluetooth communication, and GPS communication. Network 1143b may encompass wired and/or wireless networks such as a local-area network (LAN), a wide-area network (WAN), a computer network, a wireless network, a telecommunications network, another like network or any combination thereof. For example, network 1143b may be a cellular network, a Wi-Fi network, and/or a near-field network. Power source 1113 may be configured to provide alternating current (AC) or direct current (DC) power to components of UE 1100.

The features, benefits and/or functions described herein may be implemented in one of the components of UE 1100 or partitioned across multiple components of UE 1100. Further, the features, benefits, and/or functions described herein may be implemented in any combination of hardware, software or firmware. In one example, communication subsystem 1131 may be configured to include any of the components described herein. Further, processing circuitry 1101 may be configured to communicate with any of such components over bus 1102. In another example, any of such components may be represented by program instructions stored in memory that when executed by processing circuitry 1101 perform the corresponding functions described herein. In another example, the functionality of any of such components may be partitioned between processing circuitry 1101 and communication subsystem 1131. In another example, the non-computationally intensive functions of any of such components may be implemented in software or firmware and the computationally intensive functions may be implemented in hardware.

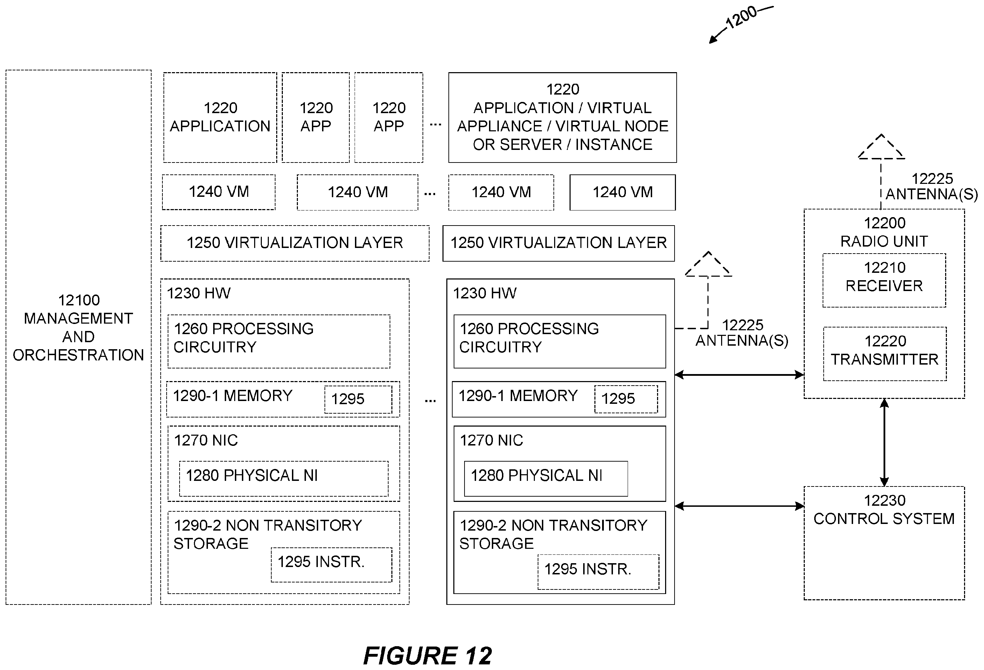

Figure 12 is a schematic block diagram illustrating a virtualization environment 1200 in which functions implemented by some examples may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some examples, some or all of the functions described herein may be implemented as virtual components executed by one or more virtual machines implemented in one or more virtual environments 1200 hosted by one or more of hardware nodes 1230. Further, in examples in which the virtual node is not a radio access node or does not require radio connectivity (e.g., a core network node), then the network node may be entirely virtualized.

The functions may be implemented by one or more applications 1220 (which may alternatively be called software instances, virtual appliances, network functions, virtual nodes, virtual network functions, etc.) operative to implement some of the features, functions, and/or benefits of some of the examples disclosed herein. Applications 1220 are run in virtualization environment 1200 which provides hardware 1230 comprising processing circuitry 1260 and memory 1290. Memory 1290 contains instructions 1295 executable by processing circuitry 1260 whereby application 1220 is operative to provide one or more of the features, benefits, and/or functions disclosed herein.

Virtualization environment 1200, comprises general-purpose or special-purpose network hardware devices 1230 comprising a set of one or more processors or processing circuitry 1260, which may be commercial off-the-shelf (COTS) processors, dedicated Application Specific Integrated Circuits (ASICs), or any other type of processing circuitry including digital or analog hardware components or special purpose processors. Each hardware device may comprise memory 1290-1 which may be non-persistent memory for temporarily storing instructions 1295 or software executed by processing circuitry 1260. Each hardware device may comprise one or more network interface controllers (NICs) 1270, also known as network interface cards, which include physical network interface 1280. Each hardware device may also include non-transitory, persistent, machine-readable storage media 1290-2 having stored therein software 1295 and/or instructions executable by processing circuitry 1260. Software 1295 may include any type of software including software for instantiating one or more virtualization layers 1250 (also referred to as hypervisors), software to execute virtual machines 1240 as well as software allowing it to execute functions, features and/or benefits described in relation with some examples described herein.

Virtual machines 1240, comprise virtual processing, virtual memory, virtual networking or interface and virtual storage, and may be run by a corresponding virtualization layer 1250 or hypervisor. Different examples of the instance of virtual appliance 1220 may be implemented on one or more of virtual machines 1240, and the implementations may be made in different ways.

During operation, processing circuitry 1260 executes software 1295 to instantiate the hypervisor or virtualization layer 1250, which may sometimes be referred to as a virtual machine monitor (VMM). Virtualization layer 1250 may present a virtual operating platform that appears like networking hardware to virtual machine 1240.

As shown in Figure 12, hardware 1230 may be a standalone network node with generic or specific components. Hardware 1230 may comprise antenna 12225 and may implement some functions via virtualization. Alternatively, hardware 1230 may be part of a larger cluster of hardware (e.g. such as in a data center or customer premise equipment (CPE)) where many hardware nodes work together and are managed via management and orchestration (MANO) 12100, which, among others, oversees lifecycle management of applications 1220.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1240 may be a software implementation of a physical machine that runs programs as if they were executing on a physical, non-virtualized machine. Each of virtual machines 1240, and that part of hardware 1230 that executes that virtual machine, be it hardware dedicated to that virtual machine and/or hardware shared by that virtual machine with others of the virtual machines 1240, forms a separate virtual network elements (VNE).

Still in the context of NFV, Virtual Network Function (VNF) is responsible for handling specific network functions that run in one or more virtual machines 1240 on top of hardware networking infrastructure 1230 and corresponds to application 1220 in Figure 12.

In some examples, one or more radio units 12200 that each include one or more transmitters 12220 and one or more receivers 12210 may be coupled to one or more antennas 12225. Radio units 12200 may communicate directly with hardware nodes 1230 via one or more appropriate network interfaces and may be used in combination with the virtual components to provide a virtual node with radio capabilities, such as a radio access node or a base station.

In some examples, some signalling can be effected with the use of control system 12230 which may alternatively be used for communication between the hardware nodes 1230 and radio units 12200.

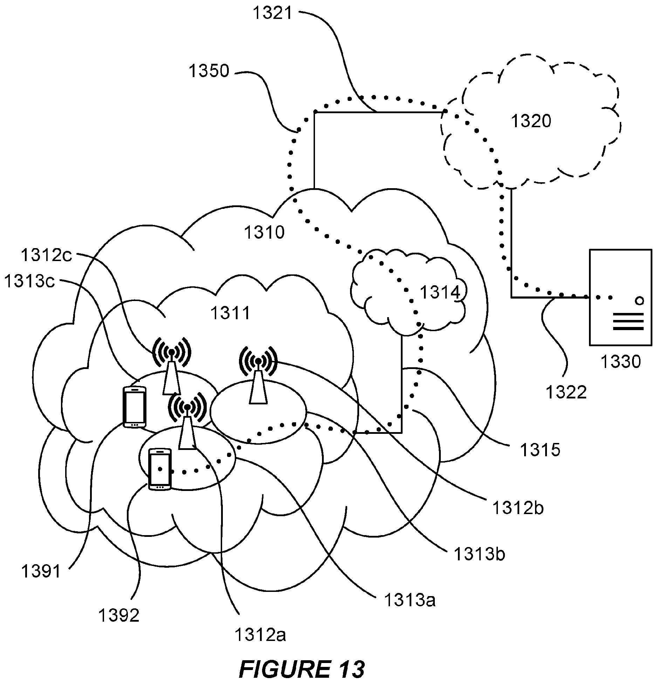

Figure 13 illustrates a telecommunication network connected via an intermediate network to a host computer in accordance with some examples. In particular, with reference to FIGURE 13, in accordance with an example, a communication system includes telecommunication network 1310, such as a 3GPP-type cellular network, which comprises access network 1311, such as a radio access network, and core network 1314. Access network 1311 comprises a plurality of base stations 1312a, 1312b, 1312c, such as NBs, eNBs, gNBs or other types of wireless access points, each defining a corresponding coverage area 1313a, 1313b, 1313c. Each base station 1312a, 1312b, 1312c is connectable to core network 1314 over a wired or wireless connection 1315. A first UE 1391 located in coverage area 1313c is configured to wirelessly connect to, or be paged by, the corresponding base station 1312c. A second UE 1392 in coverage area 1313a is wirelessly connectable to the corresponding base station 1312a. While a plurality of UEs 1391, 1392 are illustrated in this example, the disclosed examples are equally applicable to a situation where a sole UE is in the coverage area or where a sole UE is connecting to the corresponding base station 1312.

Telecommunication network 1310 is itself connected to host computer 1330, which may be embodied in the hardware and/or software of a standalone server, a cloud-implemented server, a distributed server or as processing resources in a server farm. Host computer 1330 may be under the ownership or control of a service provider, or may be operated by the service provider or on behalf of the service provider. Connections 1321 and 1322 between telecommunication network 1310 and host computer 1330 may extend directly from core network 1314 to host computer 1330 or may go via an optional intermediate network 1320. Intermediate network 1320 may be one of, or a combination of more than one of, a public, private or hosted network; intermediate network 1320, if any, may be a backbone network or the Internet; in particular, intermediate network 1320 may comprise two or more sub-networks (not shown).

The communication system of Figure 13 as a whole enables connectivity between the connected UEs 1391, 1392 and host computer 1330. The connectivity may be described as an over-the-top (OTT) connection 1350. Host computer 1330 and the connected UEs 1391, 1392 are configured to communicate data and/or signaling via OTT connection 1350, using access network 1311, core network 1314, any intermediate network 1320 and possible further infrastructure (not shown) as intermediaries. OTT connection 1350 may be transparent in the sense that the participating communication devices through which OTT connection 1350 passes are unaware of routing of uplink and downlink communications. For example, base station 1312 may not or need not be informed about the past routing of an incoming downlink communication with data originating from host computer 1330 to be forwarded (e.g., handed over) to a connected UE 1391. Similarly, base station 1312 need not be aware of the future routing of an outgoing uplink communication originating from the UE 1391 towards the host computer 1330.

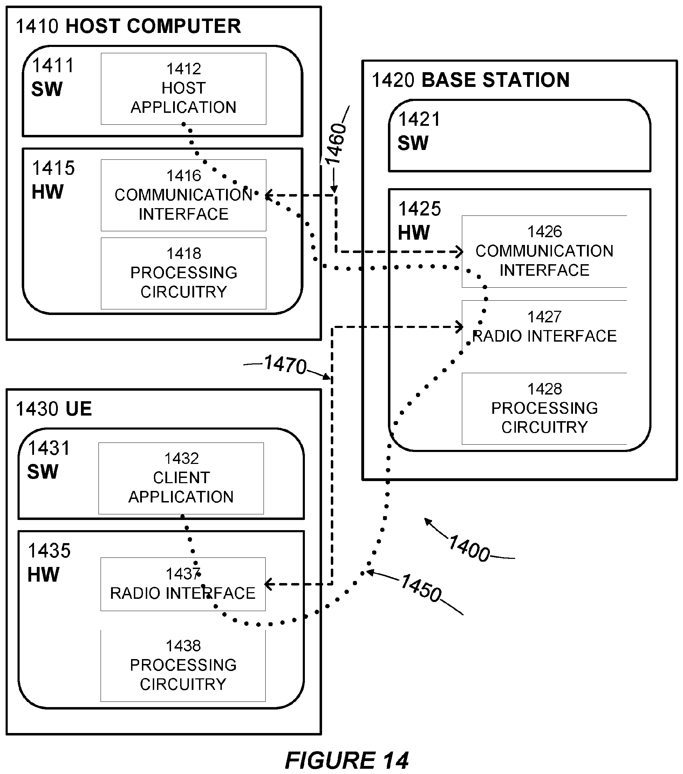

Example implementations, in accordance with an example, of the UE, base station and host computer discussed in the preceding paragraphs will now be described with reference to Figure 14. Figure 14 illustrates host computer communicating via a base station with a user equipment over a partially wireless connection in accordance with some examples. In communication system 1400, host computer 1410 comprises hardware 1415 including communication interface 1416 configured to set up and maintain a wired or wireless connection with an interface of a different communication device of communication system 1400. Host computer 1410 further comprises processing circuitry 1418, which may have storage and/or processing capabilities. In particular, processing circuitry 1418 may comprise one or more programmable processors, application-specific integrated circuits, field programmable gate arrays or combinations of these (not shown) adapted to execute instructions. Host computer 1410 further comprises software 1411, which is stored in or accessible by host computer 1410 and executable by processing circuitry 1418. Software 1411 includes host application 1412. Host application 1412 may be operable to provide a service to a remote user, such as UE 1430 connecting via OTT connection 1450 terminating at UE 1430 and host computer 1410. In providing the service to the remote user, host application 1412 may provide user data which is transmitted using OTT connection 1450.

Communication system 1400 further includes base station 1420 provided in a telecommunication system and comprising hardware 1425 enabling it to communicate with host computer 1410 and with UE 1430. Hardware 1425 may include communication interface 1426 for setting up and maintaining a wired or wireless connection with an interface of a different communication device of communication system 1400, as well as radio interface 1427 for setting up and maintaining at least wireless connection 1470 with UE 1430 located in a coverage area (not shown in Figure 14) served by base station 1420. Communication interface 1426 may be configured to facilitate connection 1460 to host computer 1410. Connection 1460 may be direct or it may pass through a core network (not shown in Figure 14) of the telecommunication system and/or through one or more intermediate networks outside the telecommunication system. In the example shown, hardware 1425 of base station 1420 further includes processing circuitry 1428, which may comprise one or more programmable processors, application-specific integrated circuits, field programmable gate arrays or combinations of these (not shown) adapted to execute instructions. Base station 1420 further has software 1421 stored internally or accessible via an external connection.

Communication system 1400 further includes UE 1430 already referred to. Its hardware 1435 may include radio interface 1437 configured to set up and maintain wireless connection 1470 with a base station serving a coverage area in which UE 1430 is currently located. Hardware 1435 of UE 1430 further includes processing circuitry 1438, which may comprise one or more programmable processors, application-specific integrated circuits, field programmable gate arrays or combinations of these (not shown) adapted to execute instructions. UE 1430 further comprises software 1431, which is stored in or accessible by UE 1430 and executable by processing circuitry 1438. Software 1431 includes client application 1432. Client application 1432 may be operable to provide a service to a human or non-human user via UE 1430, with the support of host computer 1410. In host computer 1410, an executing host application 1412 may communicate with the executing client application 1432 via OTT connection 1450 terminating at UE 1430 and host computer 1410. In providing the service to the user, client application 1432 may receive request data from host application 1412 and provide user data in response to the request data. OTT connection 1450 may transfer both the request data and the user data. Client application 1432 may interact with the user to generate the user data that it provides.

It is noted that host computer 1410, base station 1420 and UE 1430 illustrated in Figure 14 may be similar or identical to host computer 1330, one of base stations 1312a, 1312b, 1312c and one of UEs 1391, 1392 of Figure 13, respectively. This is to say, the inner workings of these entities may be as shown in Figure 14 and independently, the surrounding network topology may be that of Figure 13.

In Figure 14, OTT connection 1450 has been drawn abstractly to illustrate the communication between host computer 1410 and UE 1430 via base station 1420, without explicit reference to any intermediary devices and the precise routing of messages via these devices. Network infrastructure may determine the routing, which it may be configured to hide from UE 1430 or from the service provider operating host computer 1410, or both. While OTT connection 1450 is active, the network infrastructure may further take decisions by which it dynamically changes the routing (e.g., on the basis of load balancing consideration or reconfiguration of the network).

Wireless connection 1470 between UE 1430 and base station 1420 is in accordance with the teachings of the examples described throughout this disclosure. One or more of the various examples improve the performance of OTT services provided to UE 1430 using OTT connection 1450, in which wireless connection 1470 forms the last segment.

A measurement procedure may be provided for the purpose of monitoring data rate, latency and other factors on which the one or more examples improve. There may further be an optional network functionality for reconfiguring OTT connection 1450 between host computer 1410 and UE 1430, in response to variations in the measurement results. The measurement procedure and/or the network functionality for reconfiguring OTT connection 1450 may be implemented in software 1411 and hardware 1415 of host computer 1410 or in software 1431 and hardware 1435 of UE 1430, or both. In examples, sensors (not shown) may be deployed in or in association with communication devices through which OTT connection 1450 passes; the sensors may participate in the measurement procedure by supplying values of the monitored quantities exemplified above, or supplying values of other physical quantities from which software 1411, 1431 may compute or estimate the monitored quantities. The reconfiguring of OTT connection 1450 may include message format, retransmission settings, preferred routing etc.; the reconfiguring need not affect base station 1420, and it may be unknown or imperceptible to base station 1420. Such procedures and functionalities may be known and practiced in the art. In certain examples, measurements may involve proprietary UE signaling facilitating host computer 1410's measurements of throughput, propagation times, latency and the like. The measurements may be implemented in that software 1411 and 1431 causes messages to be transmitted, in particular empty or 'dummy' messages, using OTT connection 1450 while it monitors propagation times, errors etc.

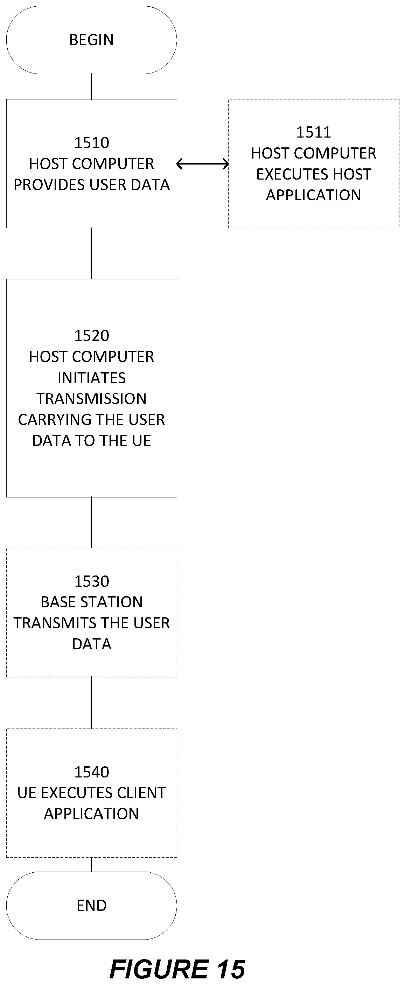

Figure 15 is a flowchart illustrating a method implemented in a communication system, in accordance with one example. The communication system includes a host computer, a base station and a UE which may be those described with reference to Figures 13 and 14. For simplicity of the present disclosure, only drawing references to Figure 15 will be included in this section. In step 1510, the host computer provides user data. In substep 1511 (which may be optional) of step 1510, the host computer provides the user data by executing a host application. In step 1520, the host computer initiates a transmission carrying the user data to the UE. In step 1530 (which may be optional), the base station transmits to the UE the user data which was carried in the transmission that the host computer initiated, in accordance with the teachings of the examples described throughout this disclosure. In step 1540 (which may also be optional), the UE executes a client application associated with the host application executed by the host computer.

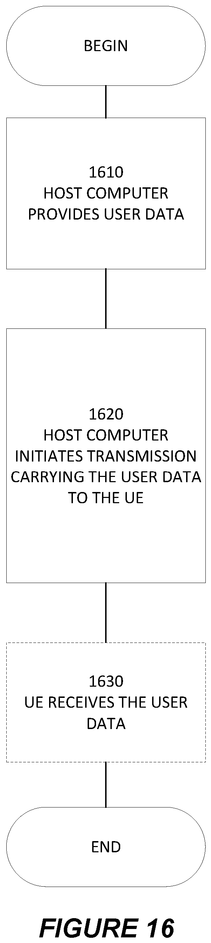

Figure 16 is a flowchart illustrating a method implemented in a communication system, in accordance with one example. The communication system includes a host computer, a base station and a UE which may be those described with reference to Figures 13 and 14. For simplicity of the present disclosure, only drawing references to Figure 16 will be included in this section. In step 1610 of the method, the host computer provides user data. In an optional substep (not shown) the host computer provides the user data by executing a host application. In step 1620, the host computer initiates a transmission carrying the user data to the UE. The transmission may pass via the base station, in accordance with the teachings of the examples described throughout this disclosure. In step 1630 (which may be optional), the UE receives the user data carried in the transmission.

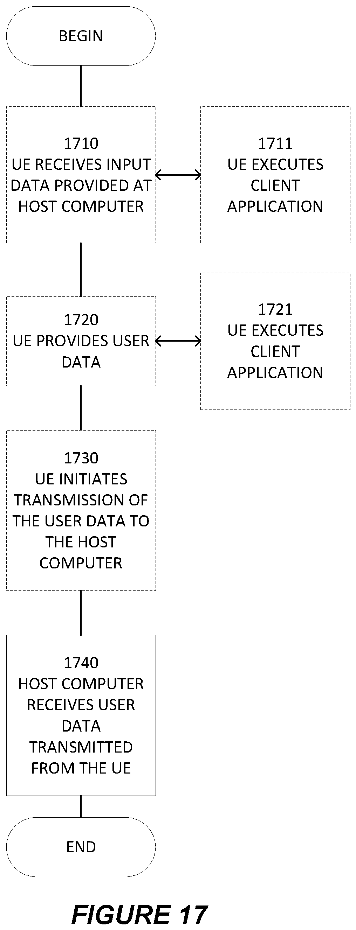

Figure 17 is a flowchart illustrating a method implemented in a communication system, in accordance with one example. The communication system includes a host computer, a base station and a UE which may be those described with reference to Figures 13 and 14. For simplicity of the present disclosure, only drawing references to Figure 17 will be included in this section. In step 1710 (which may be optional), the UE receives input data provided by the host computer. Additionally or alternatively, in step 1720, the UE provides user data. In substep 1721 (which may be optional) of step 1720, the UE provides the user data by executing a client application. In substep 1711 (which may be optional) of step 1710, the UE executes a client application which provides the user data in reaction to the received input data provided by the host computer. In providing the user data, the executed client application may further consider user input received from the user. Regardless of the specific manner in which the user data was provided, the UE initiates, in substep 1730 (which may be optional), transmission of the user data to the host computer. In step 1740 of the method, the host computer receives the user data transmitted from the UE, in accordance with the teachings of the examples described throughout this disclosure.

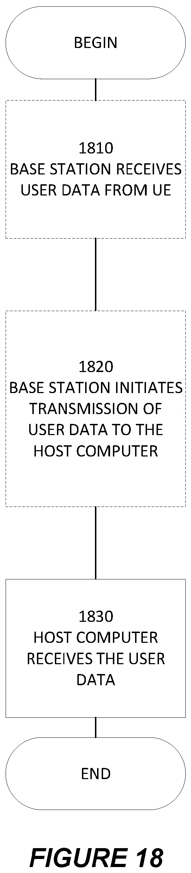

Figure 18 is a flowchart illustrating a method implemented in a communication system, in accordance with one example. The communication system includes a host computer, a base station and a UE which may be those described with reference to Figures 13 and 14. For simplicity of the present disclosure, only drawing references to Figure 18 will be included in this section. In step 1810 (which may be optional), in accordance with the teachings of the examples described throughout this disclosure, the base station receives user data from the UE. In step 1820 (which may be optional), the base station initiates transmission of the received user data to the host computer. In step 1830 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more examples of the present disclosure.

## Claims

1. A method performed by a wireless device (14), the method comprising:
choosing a selection method from among multiple selection methods (22-1, 22-2) for selecting an occasion (18-1, 18-2,...18-N) in which to transmit a random access preamble (16);
selecting, according to the chosen selection method, an occasion in which to transmit a random access preamble (16); and
transmitting a random access preamble (16) in the selected occasion; **characterized in that** the multiple selection methods (22-1, 22-2) include a random selection method in which the wireless device (14) randomly selects an occasion from among the multiple occasions (18-1, 18-2,...18-N) or from among a subset of the multiple occasions (18-1, 18-2,...18-N), with equal probability of selection among occasions (18-1, 18-2,...18-N) that occur at different times; and
a last-in-time selection method in which the wireless device (14) selects an occasion that occurs last in time among the multiple occasions (18-1, 18-2,...18-N).

2. The method of claim 1, wherein according to the random selection method, the wireless device (14) randomly selects an occasion from among a subset of the multiple occasions, wherein the subset includes one or more occasions that do not occur last in time among the multiple occasions (18-1, 18-2,... 18-N) and excludes an occasion that occurs last in time among the multiple occasions (18-1, 18-2,...18-N).

3. The method of any of claims 1-2, further comprising selecting a synchronization signal and broadcast channel block, SSB, from among multiple SSBs or selecting a channel state information reference signal, CSI-RS, from among multiple CSI-RSs, and wherein the multiple occasions (18-1, 18-2,... 18-N) correspond to the selected SSB or CSI-RS.

4. The method of any of claims 1-3, wherein the multiple occasions (18-1, 18-2,... 18-N) are included in the same random access channel slot.

5. The method of any of claims 1-4, wherein the multiple occasions (18-1, 18-2,...18-N) occur consecutively in time or comprise consecutively occurring valid occasions which are valid for transmission of a random access preamble (16).

6. The method of any of claims 1-5, wherein said choosing is based on channel occupancy by choosing an occasion that occurs last in time among the multiple occasions of the time-biased selection method in case that said occasion is not congested and choosing the random selection method otherwise.

7. The method of any of claims 1-6, wherein said choosing is based on one or more metrics, wherein:
at least one of the one or more metrics indicates or depends on a load of a random access channel on which the random access preamble (16) is to be transmitted;
at least one of the one or more metrics indicates or depends on a load of an occasion (18-N) occurring last in time among multiple occasions (18-1, 18-2,...18-N) from which the wireless device (14) is to select the occasion in which to transmit a random access preamble (16); and/or
at least one of the one or more metrics indicates or depends on listen-before-talk failure statistics.

8. The method of any of claims 1-7, wherein said choosing is based on whether or how many times the wireless device (14) has failed to successfully complete a random access procedure by transmitting a random access preamble (16) in an occasion that occurs last in time among multiple occasions (18-1, 18-2,...18-N).

9. The method of any of claims 1-8, wherein transmission of the random access preamble (16) is triggered by arrival of data to be transmitted to or from the wireless device (14) or by an event, and wherein said choosing is based on a priority of the data or the event.

10. The method of any of claims 1-9, further comprising:
performing a listen-before-talk procedure before transmitting the random access preamble (16);
transmitting a physical uplink shared channel transmission after transmitting the random access preamble (16); and
if a duration between transmission of the random access preamble (16) and transmission of the physical uplink shared channel transmission is or will be less than a threshold, transmitting the physical uplink shared channel transmission without performing another listen-before-talk procedure after transmitting the random access preamble (16).

11. The method of claim 10, wherein the physical uplink shared channel transmission is transmitted on a physical uplink shared channel resource unit that is mapped to or corresponds to the selected occasion for transmission of the random access preamble (16).

12. A wireless device (14) configured to perform the method of any of claims 1-11.

## Patentansprüche

1. Verfahren, das durch eine drahtlose Vorrichtung (14) durchgeführt wird, das Verfahren umfassend:
Auswählen eines Auswahlverfahrens aus mehreren Auswahlverfahren (22-1, 22-2) zum Auswählen einer Gelegenheit (18-1, 18-2,... 18-N), zu der eine Zufallszugriffspräambel (16) übertragen werden soll;
Auswählen einer Gelegenheit zum Übertragen einer Zufallszugriffspräambel (16) gemäß dem ausgewählten Auswahlverfahren; und
Übertragen einer Zufallszugriffspräambel (16) zu der ausgewählten Gelegenheit; **dadurch gekennzeichnet, dass** die mehreren Auswahlverfahren (22-1, 22-2) ein Zufallsauswahlverfahren einschließen, bei dem die drahtlose Vorrichtung (14) zufällig eine Gelegenheit aus den mehreren Gelegenheiten (18-1, 18-2,...18-N) oder aus einer Teilmenge der mehreren Gelegenheiten (18-1, 18-2,... 18-N), mit gleicher Auswahlwahrscheinlichkeit aus den Gelegenheiten (18-1, 18-2,... 18-N), die zu unterschiedlichen Zeiten auftreten, auswählt; und
ein Verfahren zur Auswahl des letzten Zeitpunkts, zu dem die drahtlose Vorrichtung (14) aus den mehreren Gelegenheiten (18-1, 18-2,... 18-N) eine Gelegenheit auswählt, die zeitlich zuletzt eintritt.

2. Verfahren nach Anspruch 1, wobei die drahtlose Vorrichtung (14) gemäß dem Zufallsauswahlverfahren zufällig eine Gelegenheit aus einer Teilmenge der mehreren Gelegenheiten auswählt, wobei die Teilmenge eine oder mehrere Gelegenheiten einschließt, die unter den mehreren Gelegenheiten (18-1, 18-2,... 18-N) zeitlich nicht zuletzt eintreten und eine Gelegenheit ausschließt, die zeitlich zuletzt unter den mehreren Gelegenheiten (18-1, 18-2,... 18-N) auftritt.

3. Verfahren nach einem der Ansprüche 1 bis 2, ferner umfassend das Auswählen eines Synchronisationssignals und eines Rundfunkkanalblocks, SSB, aus mehreren SSBs oder das Auswählen eines Kanalzustandsinformationsreferenzsignals, CSI-RS, aus mehreren CSI-RSs, und wobei die mehreren Gelegenheiten (18-1, 18-2,... 18-N) dem ausgewählten SSB oder CSI-RS entsprechen.

4. Verfahren nach einem der Ansprüche 1 bis 3, wobei die mehreren Gelegenheiten (18-1, 18-2,... 18-N) im selben Zufallszugriffskanalschlitz eingeschlossen sind.

5. Verfahren nach einem der Ansprüche 1 bis 4, wobei die mehreren Gelegenheiten (18-1, 18-2,...18-N) zeitlich aufeinander folgend auftreten oder aufeinander folgend auftretende gültige Gelegenheiten umfassen, die für die Übertragung einer Zufallszugriffspräambel (16) gültig sind.

6. Verfahren nach einem der Ansprüche 1 bis 5, wobei das Auswählen auf der Kanalbelegung basiert, indem aus den mehreren Gelegenheiten des zeitabhängigen Auswahlverfahrens eine Gelegenheit ausgewählt wird, die zeitlich zuletzt eintritt, falls die Gelegenheit nicht überlastet ist, und andernfalls das Zufallsauswahlverfahren gewählt wird.

7. Verfahren nach einem der Ansprüche 1 bis 6, wobei das Auswählen auf einer oder mehreren Metriken basiert, wobei:
mindestens eine der einen oder mehreren Metriken eine Last eines Zufallszugriffskanals, auf dem die Zufallszugriffspräambel (16) übertragen werden soll, angibt oder davon abhängig ist;
mindestens eine der einen oder mehreren Metriken eine Last einer Gelegenheit (18-N) angibt oder davon abhängig ist, die zeitlich zuletzt unter mehreren Gelegenheiten (18-1, 18-2,... 18-N) aufgetreten ist, aus der die drahtlose Vorrichtung (14) die Gelegenheit auswählen soll, zu der eine Zufallszugriffspräambel (16) übertragen werden soll; und/oder
mindestens eine der einen oder mehreren Metriken Listen-Before-Talk-Fehlerstatistiken angibt oder davon abhängig ist.

8. Verfahren nach einem der Ansprüche 1 bis 7, wobei das Auswählen darauf basiert, ob oder wie oft es der drahtlosen Vorrichtung (14) nicht gelungen ist, ein Zufallszugriffsverfahren durch Übertragen einer Zufallszugriffspräambel (16) zu einer Gelegenheit erfolgreich abzuschließen, die zeitlich zuletzt unter mehreren Gelegenheiten (18-1, 18-2,... 18-N) auftritt.

9. Verfahren nach einem der Ansprüche 1 bis 8, wobei die Übertragung der Zufallszugriffspräambel (16) durch das Eintreffen von Daten, die zu oder von der drahtlosen Vorrichtung (14) übertragen werden sollen, oder durch ein Ereignis ausgelöst wird, und wobei das Auswählen auf einer Priorität der Daten oder des Ereignisses basiert.

10. Verfahren nach einem der Ansprüche 1 bis 9, ferner umfassend:
Durchführen eines Listen-Before-Talk-Verfahrens vor dem Übertragen der Zufallszugriffspräambel (16);
Übertragen einer gemeinsam genutzten physikalischen Uplink-Kanal-Übertragung nach dem Übertragen der Zufallszugriffspräambel (16); und
wenn eine Dauer zwischen der Übertragung der Zufallszugriffspräambel (16) und der Übertragung einer gemeinsam genutzten physikalischen Uplink-Kanal-Übertragung kleiner als ein Schwellenwert ist oder sein wird, Übertragen der gemeinsam genutzten physikalischen Uplink-Kanal-Übertragung ohne Ausführen eines weiteren Listen-Before-Talk-Verfahrens nach der Übertragung der Zufallszugriffspräambel (16).

11. Verfahren nach Anspruch 10, wobei die Übertragung des gemeinsam genutzten physikalischen Uplink-Kanals auf einer Ressourceneinheit des gemeinsam genutzten physikalischen Uplink-Kanals übertragen wird, die der ausgewählten Übertragungsgelegenheit der Zufallszugriffspräambel (16) zugeordnet ist oder dieser entspricht.

12. Drahtlose Vorrichtung (14), die konfiguriert ist, um das Verfahren nach einem der Ansprüche 1 bis 11 durchzuführen.

## Revendications

1. Procédé mis en œuvre par un dispositif sans fil (14), le procédé comprenant :
le choix d'un procédé de sélection parmi de multiples procédés de sélection (22-1, 22-2) permettant de sélectionner une occasion (18-1, 18-2,... 18-N) dans laquelle il faut transmettre un préambule d'accès aléatoire (16) ;
la sélection, selon le procédé de sélection choisi, d'une occasion dans laquelle il faut transmettre un préambule d'accès aléatoire (16) ; et
la transmission d'un préambule d'accès aléatoire (16) dans l'occasion sélectionnée ; **caractérisé en ce que** les multiples procédés de sélection (22-1, 22-2) comportent un procédé de sélection aléatoire dans lequel le dispositif sans fil (14) sélectionne de manière aléatoire une occasion parmi les multiples occasions (18-1, 18-2,... 18-N) ou parmi un sous-ensemble des multiples occasions (18-1, 18-2,... 18-N), avec une probabilité égale de sélection parmi les occasions (18-1, 18-2,... 18-N) qui surviennent à des moments différents ; et
un procédé de sélection de dernier lieu dans lequel le dispositif sans fil (14) sélectionne une occasion qui se produit en dernier lieu parmi les multiples occasions (18-1, 18-2,... 18-N).

2. Procédé selon la revendication 1, dans lequel selon le procédé de sélection aléatoire, le dispositif sans fil (14) sélectionne de manière aléatoire une occasion parmi un sous-ensemble de multiples occasions, dans lequel le sous-ensemble inclut une ou plusieurs occasions qui ne surviennent pas en dernier lieu parmi les multiples occasions (18-1, 18-2,... 18-N) et exclut une occasion qui survient en dernier lieu parmi les multiples occasions (18-1, 18-2,... 18-N).

3. Procédé selon l'une quelconque des revendications 1 à 2, comprenant en outre la sélection d'un bloc de signal de synchronisation et de canal de diffusion, SSB, parmi de multiples SSB ou la sélection d'un signal de référence d'informations d'état de canal, CSI-RS, parmi de multiples CSI-RS, et dans lequel les multiples occasions (18-1, 18-2,... 18-N) correspondent au SSB ou CSI-RS sélectionné.

4. Procédé selon l'une quelconque des revendications 1 à 3, dans lequel les multiples occasions (18-1, 18-2,... 18-N) sont incluses dans le même créneau de canal d'accès aléatoire.

5. Procédé selon l'une quelconque des revendications 1 à 4, dans lequel les multiples occasions (18-1, 18-2,... 18-N) surviennent consécutivement dans le temps ou comprennent des occasions valides survenant consécutivement qui sont valides pour la transmission d'un préambule d'accès aléatoire (16).

6. Procédé selon l'une quelconque des revendications 1 à 5, dans lequel ledit choix est en fonction d'une occupation de canal en choisissant une occasion qui survient en dernier lieu parmi les multiples occasions du procédé de sélection à biais temporel dans un cas où ladite occasion n'est pas encombrée et le choix du procédé de sélection aléatoire dans un cas contraire.

7. Procédé selon l'une quelconque des revendications 1 à 6, dans lequel ledit choix est en fonction d'une ou plusieurs métriques, dans lequel :
au moins l'une parmi la ou les métriques indique ou dépend d'une charge d'un canal d'accès aléatoire sur lequel le préambule d'accès aléatoire (16) doit être transmis ;
au moins l'une parmi la ou les métriques indique ou dépend d'une charge d'une occasion (18-N) survenant en dernier lieu parmi de multiples occasions (18-1, 18-2,... 18-N) parmi lesquelles le dispositif sans fil (14) doit sélectionner l'occasion dans laquelle il faut transmettre un préambule d'accès aléatoire (16) ; et/ou
au moins l'une parmi la ou les métriques indique ou dépend de statistiques d'échec d'écoute avant de parler.

8. Procédé selon l'une quelconque des revendications 1 à 7, dans lequel ledit choix est en fonction du fait, ou du nombre de fois, que le dispositif sans fil (14) n'est pas parvenu à achever avec succès une procédure d'accès aléatoire en transmettant un préambule d'accès aléatoire (16) dans une occasion qui survient en dernier lieu parmi de multiples occasions (18-1, 18-2,... 18-N).

9. Procédé selon l'une quelconque des revendications 1 à 8, dans lequel une transmission du préambule d'accès aléatoire (16) est déclenchée par l'arrivée de données à transmettre vers ou à partir du dispositif sans fil (14) ou par un événement, et dans lequel ledit choix est en fonction d'une priorité des données ou de l'événement.

10. Procédé selon l'une quelconque des revendications 1 à 9, comprenant en outre :
la mise en œuvre d'une procédure d'écoute avant de parler avant transmission du préambule d'accès aléatoire (16) ;
la transmission d'une transmission en canal partagé de liaison montante physique après transmission du préambule d'accès aléatoire (16) ; et
si une durée entre la transmission du préambule d'accès aléatoire (16) et la transmission de la transmission en canal partagé de liaison montante physique est ou va être inférieure à un seuil, la transmission de la transmission en canal partagé de liaison montante physique sans mettre en œuvre une autre procédure d'écoute avant de parler après transmission du préambule d'accès aléatoire (16).

11. Procédé selon la revendication 10, dans lequel la transmission en canal partagé de liaison montante physique est transmise sur une unité de ressource de canal partagé de liaison montante physique qui est mappée ou correspond à l'occasion sélectionnée pour transmission du préambule d'accès aléatoire (16).

12. Dispositif sans fil (14) configuré pour mettre en œuvre le procédé selon l'une quelconque des revendications 1 à 11.
